Europäisches Patentamt

European Patent Office

Office européen des brevets

(11) Publication number: **0 179 541**
**A2**

## (12) EUROPEAN PATENT APPLICATION

(21) Application number: **85302198.8**

(22) Date of filing: **29.03.85**

(51) Int. Cl.⁴: **G 01 F 1/66**

(30) Priority: **19.10.84 US 663081**

(43) Date of publication of application:
**30.04.86 Bulletin 86/18**

(84) Designated Contracting States:
**BE DE FR GB IT**

(71) Applicant: **SMITH METER INC.**
**Post Office Box 10428 1602 Wagner Avenue**
**Erie Pennsylvania 16514(US)**

(72) Inventor: **Bradley, George W.**
**2324A East 43rd Street No. 8**
**Erie PA 16510(US)**

(72) Inventor: **Sienicki, John W.**
**8876 Williams Road**
**North East PA 16428(US)**

(74) Representative: **Mair, Richard Douglas et al,**
**F.J. Cleveland & Company 40-43 Chancery Lane**
**London WC2A 1JQ(GB)**

(54) Sonic flow meter.

(57) The disclosed meters employ mechanical radiant energy to determine the flow velocity of flowing material. Mechanical radiant energy is propagated through the flowing material in two directions to permit the material to cause a variance between the average velocity at which the energy travels in a first direction from the average velocity at which the energy travels in a second direction. Since the variance in average velocities is due to the movement of the material and is related thereto, the variance, and the difference in time required for the energy to propagate through the material, can be used to determine the flow velocity of the material. One embodiment employs the following equation to calculate the flow velocity:

$$V = \frac{K(t_u - t_d)}{(t_u + t_d)^2}$$

where $t_u$ and $t_d$ represent the time required for the energy to traverse the path in each direction. Another embodiment transmits energy pulses in each direction in groups of at least two pulses and imposes a time delay between the time each pulse finishes propagating along the path and the transmission of the next pulse. The time required for the energy to propagate along the path in each direction is determined from the time required to transmit along the path all the energy pulses of each group and the total duration of the time delays. A further embodiment examines the received energy and determines whether the level of the transmitted energy should be altered to improve signal processing. A further embodiment assumes that the energy has reached the end of the path, and is therefore able to determine the time required for the pulse to traverse the path, by defining a receive point which is a predetermined point at which the received signal crosses a reference axis following the peak level of the signal. The preferred embodiment combines all the features identified above.

FIG. 2

**0179541**

Field of the Invention

The present invention relates generally to measuring the rate at which material flows and, more particularly, to a meter which employs sonic energy to measure the velocity at which material flows.

Description of the Prior Art

Often, the rate at which material flows through a supply line must be determined with the greatest possible accuracy. For example, the actual volume of material transferred to a buyer of the material is determined by a flow meter that measures the volume of material that flows from the seller's reservoir of material to the buyer's container. A meter that inaccurately determines the volume of material that is transferred to the buyer will cause an adverse impact on the seller or the buyer.

Meters that employ sonic energy to measure the rate at which material flows through the meter, which are commonly referred to as sonic flow meters, are known. U. S. Patents Nos. 3,537,309; 3,653,259; 3,835,704; 3,869,915; 3,918,304; 3,974,693; 3,987,674; and 4,232,548 disclose typical sonic flow meters. Generally, sonic flow meters transmit sonic energy through the material flowing through a conduit between a pair of sonic transducers in both the upstream and downstream directions, with reference to the direction of flow of the material through the conduit. The transducers are

1A

mounted to either existing supply line or to a pipe section, or spool piece, that is provided by the manufacturer as a component of the meter.  In the former case, the conduit is the portion of the existing supply line through which the sonic energy propagates.  In the latter case, the conduit is the spool piece.  In either case, the transducers are mounted to be stationary relative to the conduit.  A transmitting transducer produces sonic energy upon its receipt of electrical energy and a receiving transducer produces electrical energy upon its receipt of sonic energy.  Often, each transducer of the meter is used as both a transmitting and receiving transducer at different times during operation of the meter.  The no-flow velocity is the velocity, relative to the conduit, at which the sonic energy, or sound, propagates through the material when the material is not flowing.  The no-flow velocity is decreased when the material is flowing and the sonic energy propagates upstream through flowing material – or against the flow of the material.  The no-flow velocity is increased when the material is flowing and the sonic energy propagates downstream through the flowing material – or with the flow of the material.  Therefore, when the material is flowing and the lengths of the paths along which the energy propagates between transducers is the same in both the upstream and downstream directions, the time required for sonic energy to travel upstream is greater than the time required for sonic energy to travel downstream.  That difference in propagation time, or the propagation time difference, can be measured and used to calculate the velocity at which the material flows through the meter and the volumetric flow rate of the material through the meter.

The propagation time difference, however, is extremely small relative to the velocity at which the material is flowing through the conduit. Inaccuracies introduced into the propagation time difference measured by the meter have a great impact on the calculated velocity of the material. Therefore, it is common to transmit a number of sonic pulses to make a number of measurements in both the upstream and downstream directions and calculate an average propagation time difference from the results of the multiple measurements. That technique shall be referred to hereinafter as an "averaging technique". The sonic flow meters described in U. S. Patents Nos. 3,869,915 and 4,232,548 employ an averaging technique, and calculate material velocity at the end of each measurement cycle, which includes taking a predetermined number of measurements in the upstream or downstream direction, referred to hereinafter as "conducting a measurement cycle", and the taking of the same number of measurements in the remaining direction. As used herein, the phrase "taking a measurement" shall mean the transmission of a pulse of sonic energy by a transmitting transducer, the receipt of the pulse by the receiving transducer, and the recording of information regarding the time required for the pulse to travel from the transmitting to the receiving transducer.

3.

Despite the general acceptance of sonic flow meters, several problems are associated with their use which affect the accuracy of the measurements provided by the meters. One source of measurement error is the time required by the meter to process electrical signals. Signal processing time can vary from one sonic meter to another of the same type due to variations in the lengths of the electrical conductors which provide electrical communication between the transducers and the signal processing circuitry of the meter. Known sonic flow meters do not compensate for the variations in conductor lengths. Therefore, sonic flow meters having conductor lengths which vary from meter to meter, due to differences in installation requirements for each meter, will provide different measurements of the same flow rate.

When a sonic pulse is transmitted by a transmitting transducer to initiate a measurement, the time of receipt of the transmitted sonic pulse by the receiving transducer is recorded by the meter. Such a transmitted pulse will be referred to hereinafter as a "measurement pulse". However, sonic reverberations can be produced within the conduit after each measurement pulse is received. If the transmitting transducer produces another measurement pulse immediately upon receipt of the preceding measurement pulse by the receiving transducer, the receiving transducer might receive the reverberations and misinterpret them as other measurement pulses. Accordingly, some known sonic flow meters introduce a time delay between the receipt of a measurement pulse by the receiving transducer and the transmission of the next measurement pulse by the transmitting transducer to permit reverberations to be attenuated by the flowing material to a level at which they cannot be misinterpreted as measurement pulses. The time period between the receipt of a measurement pulse and the transmission of the next measurement pulse will be referred to hereinafter as a "blanking period". Since the time required to conduct a measurement cycle, referred to hereinafter as the "cycle time", includes a blanking period for each measurement taken during the measurement cycle, the total time representing the blanking periods occurring during the cycle, referred to herein as the "blanking time", must be subtracted from the cycle time before the propagation time can be calculated.

Known sonic flow meters which use the averaging technique and a blanking period assume that the length of the blanking period is constant from one measurement to the next. In fact, the lengths of the blanking periods can vary during the operation of the meter. Known systems fail to compensate for those variations and, therefore, introduce inaccuracies into the resulting measurements.

It is desirable to ensure that the electrical signals, which are created by the receiving transducer when measurement pulses are received, have a relatively constant amplitude from measurement cycle to measurement cycle to facilitate distinguishing those electrical signals from electrical noise. However, known sonic flow meters adjust the amplitude of the electrical signals created by the receiving transducer, by adjusting the degree of amplification of the electrical signal

5.

produced by the receiving transducer, thus adjusting the amplification of the electrical noise present in the system, and degrading the signal to noise ratio of the system.

To properly measure sonic pulse propagation time, it is necessary to establish a definable point at which a measurement pulse is considered to have been received by the receiving transducer. Since a measurement pulse is a waveform with a distinct length, a distinct period of time passes between the time at which the leading edge of the pulse passes a point and the time at which the trailing edge of the pulse passes the point. That time period is of significant length when compared to the propagation time difference. Therefore, if the point at which the measurement pulse is considered to be received, or the receive point, is permitted to vary along the length of the measurement pulse, there is a high likelihood that the calculated propagation time difference will be inaccurate. A technique for establishing a receive point is disclosed in U. S. Patent No. 4,232,548, which discloses a sonic meter that uses the points at which the measurement pulse crosses a reference axis as potential receive points. At the beginning of each measurement cycle, the meter determines which of those potential receive points will be considered the receive point for that measurement cycle. Different potential receive points are used during successive measurement cycles in the hope that any errors will be averaged out over succeeding cycles. A second technique for determining the receive point is disclosed in U. S. Patent No. 3,869,915. At the beginning of each measurement cycle,

6.

IW OFFICES
D. YEAGER, P.C.
RTER BUILDING

the meter records the time elapsing between (i) the
transmission by the transmitting transducer of the first
measurement pulse of the measurement cycle and (ii) detection
by the receiving processing circuitry of the first crossing of
a reference voltage level by the electrical signal produced by
the receiving transducer upon receipt of the measurement
pulse. For each measurement cycle, the meter notes the time
elapsing following transmission of the measurement pulse and
looks for the first zero crossing of the receive signal
following expiration of the recorded time period. Obviously,
a significant, sudden variation in the propagation time of
transmitted measurement pulses, within a cycle, from the
propagation time of the first measurement pulse will cause a
different receive point to be recognized.

Therefore, there is a need for a sonic flow meter which
provides material velocity measurements which are more
accurate than those provided by known sonic flow meters. In
particular, there is a need for a sonic flow meter which
addresses one or more of the problems identified above that
are associated with known sonic flow meters.

### SUMMARY OF THE INVENTION

The present invention provides a meter for measuring flow
velocity of a material. The meter can, but need not, include
a conduit through which the material flows. If the meter does
not include a housing, the meter can be secured to an existing
supply line for the material. Apparatus is provided for
propagating mechanical radiant energy, such as sound or

7.

ultrasound, along at least one propagation path. The energy propagating apparatus is adapted to propagate energy in two directions along the propagation path. Material travelling across the propagation path will cause a variance between the average velocity at which the energy propagates along the path in a first direction and the average velocity at which the energy propagates along the path in a second direction. The energy propagating apparatus generates a receive signal each time the energy reaches a termination point of the propagation path. Apparatus is provided for causing the propagating apparatus to propagate energy along the path in each direction. Receiving apparatus is provided for receiving the receive signals and for determining the time required for the energy to propagate along the path in each direction. Apparatus is provided for calculating the flow velocity of material through which the energy propagates according to the following expression:

$$V = \frac{K(t_u - t_d)}{(t_u + t_d)^2}$$

where:

    $V$ = the velocity at which the material is flowing across the propagation path,

    $T_u = t_u + T_{e'}$

$$T_d = t_d + T_e,$$

$$K = \frac{2b^2}{(b-2R)\cos\theta},$$

$\theta$ = the angle formed by the propagation path and the direction of flow of the material,

D = the length of the propagation path,

R = the length of any portion of the path where it is assumed that net flow velocity is zero,

$t_u$ = the the time required for the energy to propagate along the path in the first direction,

$t_d$ = the time required for the energy to propagate along the path in the second direction, and

$T_e$ = the time required for the causing apparatus to cause the propagating apparatus to initiate propagation of the energy, for the propagating apparatus to generate a receive signal upon the energy reaching a termination point, and for the receive signal to be received by the receiving apparatus.

9.

Preferably, the propagating apparatus transmits a first group of at least two sonic pulses along the path in the first direction and a second group of at least two sonic pulses along the path in a second direction prior to each calculation made by the calculating apparatus. Also preferably, the calculating apparatus includes apparatus for recording the time required for each pulse to propagate along the path, apparatus for imposing a time delay between the time each pulse finishes propagating along the path and the transmission of the next pulse, and apparatus for accumulating the total duration of the time delays imposed during the transmission of each group. The calculating apparatus would then determine the value of $(t_u - t_d)$ using the following expression:

$$(t_u - t_d) = \frac{(Et_u - Et_d)}{N}.$$

and determining $(t_u + t_d)$ by using the following expression:

$$(t_u + t_d) = \frac{(Et_u - B_u + Et_d - B_d) - 2T_e}{N}.$$

where:

$Et_u$ = the time required for the meter to cause all the sonic pulses of the first group to propagate along the path,

10.

$Et_d$ = the time required for the meter to cause all the sonic pulses of the second group to propagate along the path,

$B_u$ = the total duration of the time delays imposed during transmission of the first group of sonic pulses along the path,

$B_d$ = the duration of all the time delays imposed during transmission of the second group of pulses along the path, and

$N$ = the number of the sonic pulses transmitted in each the group.

A further meter is provided by the present invention for measuring flow velocity. Propagating apparatus is provided for propagating mechanical radiant energy, such as sound or ultrasound, along at least one propagation path. The energy propagating apparatus is adapted to propagate energy in two directions along the propagation path. Material travelling across the propagation path causes a variance between the average velocity at which the energy propagates along the path in a first direction and the average velocity at which the energy propagates along the path in a second direction. The propagating apparatus generates a receive signal each time the energy reaches a termination point of the propagation path. Apparatus is provided for causing the propagating apparatus to

11.

propagate energy along the path in each direction. Receiving apparatus is provided for receiving the receive signals and for determining the time required for the energy to propagate along the path in each direction. Apparatus is provided for determining from the determined times the flow velocity of material through which the energy propagates. The propagating means transmits a first group of at least two energy pulses along the path in the first direction and a second group of at least two energy pulses along the path in the second direction prior to each determination of velocity made by the determining apparatus. The determining apparatus further includes apparatus for recording the time required for each pulse to propagate along the path, apparatus for imposing a time delay between the time each pulse finishes propagating along the path and the transmission of the next pulse, and apparatus for accumulating the total duration of time delays imposed during the transmission of each group. The receiving means determines the time required for energy to propagate along the path in each direction from the time required to transmit along the path all the energy pulses of each group and the total duration of the time delays.

The present invention provides a further meter for measuring flow velocity. Apparatus for propagating mechanical radiant energy, such as sound or ultrasound, along at least one propagation path is provided. The propagating apparatus is adapted to propagate the energy in two directions along the propagation path. Material travelling across the propagation path causes a variance between the average velocity at which

12.

the energy propagates along the path in a first direction and the average velocity at which the energy propagates along the path in a second direction. The propagating apparatus generates a receive signal each time the energy reaches a termination point of the propagation paths. Apparatus is provided for causing the propagating means to propagate energy along the path in each direction. Apparatus is provided for receiving the receive signals and for determining the time required for the energy to propagate along the path in each direction. Apparatus is provided for determining from the determined times the flow velocity of material through which the energy propagates. Apparatus is provided for determining from a group of at least one receive signal whether the propagating apparatus should alter the level of the energy produced by the propagating apparatus and for causing the propagating apparatus to effect any such alteration.

The present invention provides a further meter for measuring flow velocity. Apparatus is provided for propagating mechanical radiant energy, such as sound or ultrasound, along at least one propagation path. The energy propagating apparatus is adapted to propagate energy in two directions along the propagation path. Material travelling across the propagation path causes a variance between the average velocity at which the energy propagates along the path in a first direction and the average velocity at which the energy propagates along the path in a second direction. The propagating apparatus generates a receive signal each time the energy reaches a termination point of the propagation path.

13.

CES
\GER. P.C.
IUILDING

Apparatus is provided for causing the propagating apparatus to propagate the energy along the path in each direction. Apparatus is provided for receiving the receive signals and for determining the time required for the energy to propagate along the path in each direction. Apparatus is provided for determining from the determined times the flow velocity of material through which the energy propagates. The receiving apparatus determines the time required for the energy to propagate along the path by measuring the time elapsing from creation of the energy by the propagating apparatus to receipt by the receiving apparatus of the receive point of the receive signal corresponding to the energy. The receive point is a predetermined point at which the receive signal crosses a reference axis following the peak level of the receive signal. Preferably, the predetermined point is the third point following the peak level.

When used in the present application, the term "sonic" and "sound" shall be construed to include "ultrasonic" and "ultrasound", respectively.

## BRIEF DESCRIPTION OF THE DRAWINGS

The following detailed description of the preferred embodiments can be understood better if reference is made to the drawings, in which:

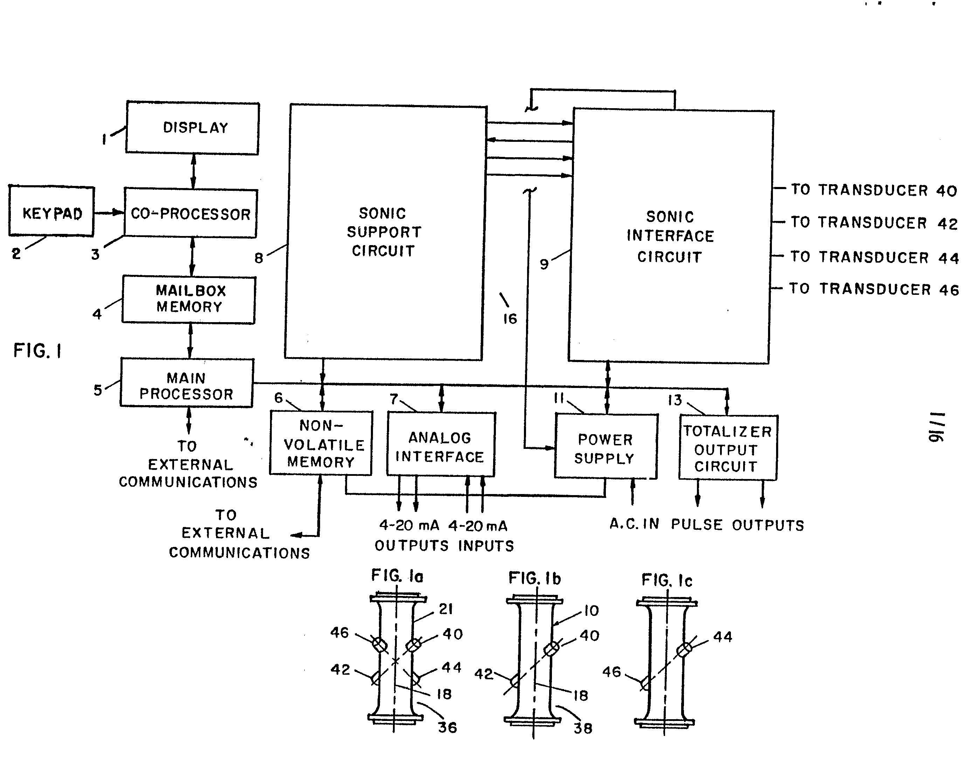

FIG. 1 shows the preferred signal processing circuit of the present invention;

14.

LAW OFFICES
RT D. YEAGER. P.C.

FIG. la shows the housing and transducer arrangement for a meter used to determined the flow velocity at two points within the material;

FIGS. lb and lc show housing and transducer arrangements useful for determining flow velocity of the material at a single point;

FIG. 2 is a cross-sectional view of the apparatus shown in FIG. lb;

FIG. 3 is a graphic representation of several measurement cycles;

FIG. 4 is a detailed graphical representation of a portion of a measurement cycle;

FIGS. 5 and 6 are detailed circuit representations of sonic support circuit 8 shown in FIG. 1;

FIG. 7 is a detailed circuit representation of sonic interface circuit 9 shown in FIG. 1;

FIG. 8 is a detailed circuit representation of AND gate 528 and switch 540 shown in FIG. 7;

FIG. 9 is a detailed circuit representation of amplifier 584, band pass filter 588, transformer 552, and switch 536 shown in FIG. 7;

FIG. 10 is a detailed circuit representation of peak detector 592 shown in FIG. 7;

FIG. 11 is a detailed circuit representation of A/D converter 596 shown in FIG. 7;

FIG. 12 is a graphical representation of a transmit electrical signal;

FIG. 13 is a graphical representation of a receive electrical signal showing a receive point; and

FIGS. 14a, 14b and 14c are schematic circuit representations of another circuit useful for implementing circuit 9.

## DETAILED DESCRIPTION OF THE PREFERRED EMBODIMENTS

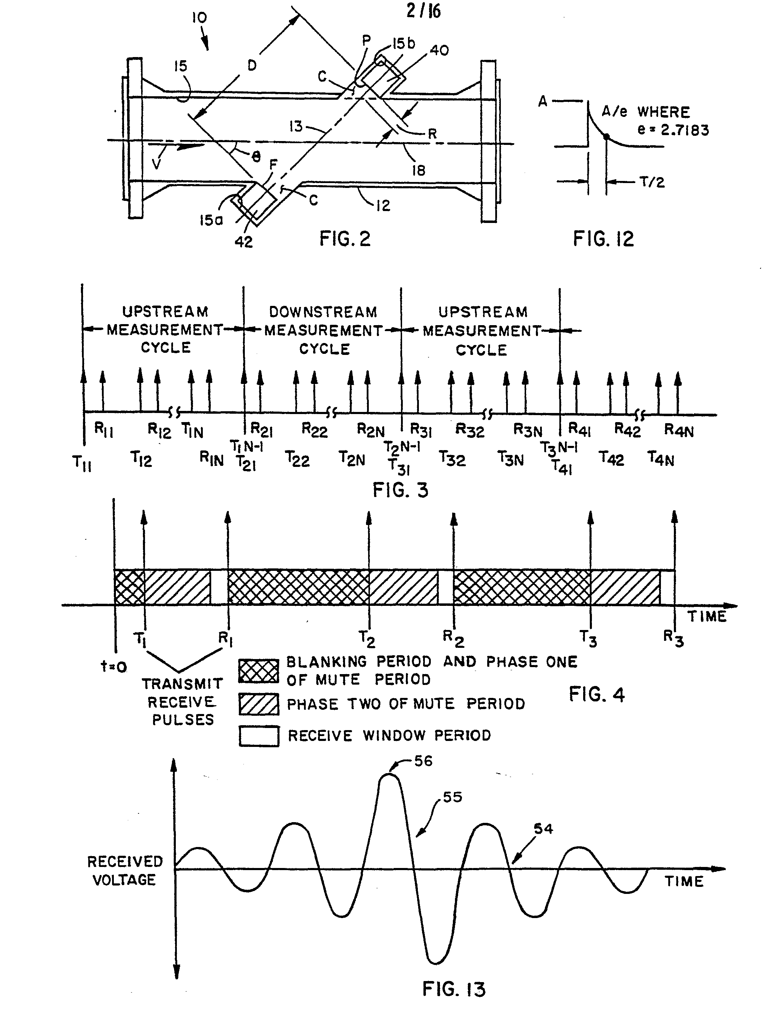

The present invention can provide a meter that includes or does not include the conduit through which the sonic energy propagates. The preferred embodiment described below includes a conduit. FIGS. 1b and 2 show ultrasonic flow meter 10, the preferred embodiment of the present invention, which will be described below as it is adapted to measure the velocity at which a fluid flows through meter 10. Meter 10 employs two ultrasonic transducers, 40 and 42 which are mounted to a spool piece or housing 12. Each transducer 40 and 42 is adapted to receive sonic energy and convert it to an electrical signal, and to generate sonic energy from an electrical signal received by it. During operation of meter 10, each of transducers 40 and 42 is used both to transmit and to receive sonic energy. Transducers 40 and 42 are secured within the wall of housing 12. Transducers 40 and 42 are secured to surfaces 15a and 15b, respectively, defined by housing 12. Transducers 40 and 42 are mounted in any suitable fashion to establish a sonic path 13 between transducers 40 and 42 that forms a desired angle θ with respect to longitudinal axis 18 of housing 12. Sonic path 13 passes through a passage 15 defined by housing 12 and, therefore, passes through material flowing therethrough. Housing 12 is placed in series with a supply line (not shown) through which flows the fluid whose flow rate is to be measured. Transducers 40 and 42 communicate electrically with control system 16 shown in block diagram form in FIG. 1. System 16 controls the operation of transducers 40 and 42 and calculates and displays the velocity at which fluid flows through housing 12 and the rate of volumetric flow through housing 12. To calculate the fluid velocity, transducers 40 and 42 alternately transmit ultrasonic energy pulses - or measurement pulses - through the material. One measurement includes the transmission of a measurement pulse by transducer 40 or 42, the receipt by the remaining transducer of that measurement pulse, and the processing of the electrical receive signal produced by the receiving transducer. During an upstream measurement, transducer 40 is the transmitting transducer and transducer 42 is the receiving transducer. During a downstream measurement, transducer 42 is the transmitting transducer and transducer 40 is the receiving transducer. A typical receive signal 56 is presented graphically by FIG. 13. An upstream measurement cycle consists of a predetermined number, N, of measurements. A downstream cycle consists of N downstream measurements. A time delay, or "blanking period", is interposed between the receipt by system 16 of point 54 of receive signal 55 generated by each measurement pulse and the transmission of the next measurement pulse, to permit reverberations that are generated during a measurement to become sufficiently attenuated by the material before taking the next measurement. The time required for a measurement pulse to

17.

travel between transducers 40 and 42 - the propagation time - is greater for measurement pulses travelling upstream than the propagation time for measurement pulses travelling downstream due to the movement of the material through housing 12. Meter 10 uses the difference in propagation times to calculate the fluid velocity.

A derivation of the equations implemented by meter 10 to calculate fluid velocity is presented below. Referring to FIG. 2, D represents the distance between the active - or sonic pulse producing - faces F of transducers 40 and 42. R represents the distance between the center of face F of a transducer 40 or 42 and the inside surface of housing 12. It is assumed that the net velocity of the material located within chambers C, which are defined by surfaces 15a and 15b, is zero with respect to housing 12. Therefore, the velocity of the sonic pulses travelling in chambers C along path 13 is not enhanced or retarded by the material located within chambers C. $\theta$ represents the angle defined by sonic path 13 followed by measurement pulses as they propagate between transducers 40 and 42 and longitudinal axis 18 of housing 12.

The measured upstream time, $T_u$ - which is measured by meter 10 - can be expressed by the following equation:

$$T_u = Z / (C - V \cos\theta) + T_e + Y/C, \qquad (1)$$

Where:

$$Z = D-2R,$$

$$Y = 2R,$$

18.

$T_e$ = the time required during a measurement to convey the transmit signal to the transmitting transducer, to generate a receive signal, to convey the receive signal to detecting circuitry and to detect the receive signal,

C = the speed of sound in the material, and

V = the velocity of the material.

The measured downstream time, $T_d$ - which is measured by meter 10 - can be expressed by the following equation:

$$T_d = Z/ (C + V \cos\theta) + T_e + Y/C, \qquad (2)$$

It follows that:

$$t_u = Z/ (C - V \cos\theta) + Y/C \qquad (3)$$

and

$$t_d = Z/ (C + V \cos\theta) + Y/C \qquad (4)$$

19.

where:

$$t_u = T_u - T_e \text{ ; and}$$
$$t_d = T_d - T_e,$$

and $t_u$ and $t_d$ represent the actual upstream and downstream propagation times, respectively.

Further:

$$A = (ZC + ZV \cos\theta - ZC + ZV \cos\theta)/(C^2 - V^2 \cos^2\theta) \quad (5)$$

$$B = (ZC - ZV \cos\theta + ZC + ZV \cos\theta)/$$
$$(C^2 - V^2 \cos^2\theta) + 2Y/C \quad (6)$$

where:

$$A = t_u - t_d$$
$$B = t_u + t_d$$

Since $C^2$ is much greater than $(V^2 \cos\theta)$:

$$A = 2ZV \cos\theta/C^2 \quad (7)$$

$$B = 2(Z + Y)/C \quad (8)$$

Accordingly:

$$C = 2(Z + Y)/B \text{ ;} \quad (9)$$

20.

Substituting equation (9) into equation (7) yields:

$$\dot{A} = \frac{ZV\,B^2\,\cos\theta}{2\,(Z+Y)^2}. \tag{10}$$

Accordingly:

$$V = 2A(Z+Y)^2/ZB^2\cos\theta, \tag{11}$$

and:

$$V = KA/B^2 \tag{12}$$

where $K = 2\,(Z+Y)^2/Z\cos\theta$:

Substituting the expressions for A and B into equation (12) yields:

$$V = K\,(t_u - t_d)/(t_u + t_d)^2, \tag{13}$$

which can be expressed as:

$$V = K\,(T_u - T_d)/(T_u + T_d - 2\,T_e)^2 \tag{14}$$

Equation (14) is implemented in meter 10 to determine material velocity. In equation (14) the fluid velocity, V, is defined by the variable propagation times, $T_u$ and $T_d$, and by the constants D, R, $\theta$ and $T_e$. Including the term $T_e$ in equation (14) permits meter 10 to automatically compensate for variations, from meter to meter, in $T_u$ and $T_d$ which are caused primarily by the variations in the lengths of the conductors, from meter to meter, carrying signals between the transducers and the processing circuits. It should be noted that the calculated material velocity is independent of C, the speed of sound in the material being monitored. Thus, meter 10 need not compensate for variations of the speed of sound in the material.

The values of $T_u$ and $T_d$ for one calculation of flow velocity are determined by meter 10 and used to perform the calculation described by equation (14). $T_u$ is measured and recorded during an upstream measurement cycle and $T_d$ is measured and recorded during a preceding or succeeding downstream measurement cycle. The volumetric flow rate can be calculated by meter 10 by multiplying the calculated velocity by the cross-sectional area of housing 12.

As shown in FIGS. 3 and 4, each measurement cycle consists of a number of measurements, N, made in the same direction, upstream or downstream. The cycle time is the time elapsing between the transmission of the first measurement pulse of the cycle and the termination of the blanking period generated upon receipt of the last measurement pulse transmitted during the cycle. Each measurement includes the transmission of a measurement pulse in the upstream or downstream direction and extends from the time of transmission of the pulse to the time of transmission of the next measurement pulse in the same direction. The propagation time is the time occurring between the transmission of a measurement pulse by a transducer 40 or 42 and the receipt of the transmitted measurement pulse by the remaining transducer. The time period occurring between the detection of point 54 of receive signal 55 and the generation of the electrical transmit signal to generate the next measurement pulse is the blanking period. The time spanned by the blanking period is the blanking time. Accordingly, a measurement consists of the propagation time plus the blanking time plus $T_e$. The cycle time is equal to the total of the propagation times, the blanking times, and all $T_e$'s occurring during the cycle. Therefore, to obtain the total propagation time for a measurement cycle - that is, the total time during which a measurement pulse was propagating from a transmitting transducer to a receiving transducer - it is necessary to subtract from the cycle time the total blanking time accumulated during a measurement cycle and the total $T_e$'s accumulated during a measurement cycle. Dividing the total propagation time by the number, N, of measurement pulses, transmitted during the cycle yields $t_u$ or $t_d$, depending on whether an upstream or downstream measurement cycle has just occurred. It should be noted that system 16 does not subtract from the cycle time an assumed blanking time multiplied by N, since the blanking time can vary from measurement cycle to measurement cycle. Rather, system 16 accumulates and records the actual lengths of the blanking periods imposed during the measurement cycle and subtracts that total blanking time from the cycle time to achieve the total measured times, $T_u$ or $T_d$, for the cycle. FIG. 3 shows upstream and downstream

23.

measurement cycles. FIG. 4 shows a portion of a measurement cycle and further identifies several blanking periods.

During an upstream measurement cycle, meter 10 transmits $N_u$ measurement pulses from transducer 40 to transducer 42, that is, $N_u$ upstream measurement pulses, and records the total measured upstream time. During a downstream measurement cycle, meter 10 transmits $N_d$ measurement pulses from transducer 42 to transducer 40, that is, $N_d$ downstream measurement pulses, and records the total measured downstream time. Upon completion of two successive cycles, meter 10 employs equation (14) to calculate flow velocity. During a measurement cycle system 16 records the cycle time in a counter. Simultaneously, another counter of system 16 records the total blanking time. The total number of measurements, N, comprising a measurement cycle is predetermined and preset into a counter that is decremented each time a measurement is completed.

The upstream and downstream cycle times, $Et_u$ and $Et_d$, respectively, are related to $T_u$, the measured upstream time for a single upstream measurement, and $T_d$, the measured downstream time for a single downstream measurement, by the following expressions:

$$Et_u = \sum_{i=1}^{N} Tu_i + \sum_{i=1}^{N} Bu_i \qquad (15)$$

24.

$$Et'_d = \sum_{i=1} T_{d_i} + \sum_{i=1} B_{d_i} \tag{16}$$

where $B_{u_i}$ is the upstream blanking time occurring during the ith measurement of an upstream cycle, $B_{d_i}$ is the blanking time occurring during the ith measurement of a downstream cycle, N is the number of measurements taken or measurement pulses transmitted and received consecutively during a measurement cycle, $T_{u_i}$ is the measured upstream time of the ith upstream measurement, and $T_{d_i}$ is the measured downstream time of the ith downstream measurement. Since $T_u$ may be expressed as $(t_u + T_e)$, and $T_d$ may be expressed as $(t_d + T_e)$, equations (15) and (16) can be expressed as:

$$Et_u = \sum_{i=1}^{N} (t_{u_i} + T_e) + \sum_{i=1}^{N} B_{u_i} = NT_e + \sum_{i=1}^{N} t_{u_i} + \sum_{i=1}^{N} B_{u_i} \tag{17}$$

$$Et_d = \sum_{i=1}^{N} (t_{d_i} + T_e) + \sum_{i=1}^{N} B_{d_i} = NT_e + \sum_{i=1}^{N} t_{d_i} + \sum_{i=1}^{N} B_{d_i} \tag{18}$$

Where the averaging technique is used, that is, where N measurements are made in each of the upstream and downstream directions to obtain a single velocity measurement, equation (13) can be rewritten as follows:

$$NV = k \left( \sum_{i=1}^{N} (t_{u_i} - t_{d_i}) \right) \Big/ \left( \sum_{i=1}^{N} (t_{u_i} + t_{d_i}) \right)^2 \tag{19}$$

$$\sum_{i=1}^{N} (t_{u_i} + t_{d_i}) = Et_u + Et_d - 2NT_\ell - \sum_{i=1}^{N}(B_{d_i} + B_{u_i}) \quad (20)$$

$$\sum_{i=1}^{N} (t_{u_i} - t_{d_i}) = Et_u - Et_d + \sum_{i=1}^{N} (B_{d_i} - B_{u_i}) \quad (21)$$

Substituting equations (20) and (21) into equation (19) and solving for V yields:

$$V = \frac{K(Et_u - Et_d) + \sum\limits_{i=1}^{N}(B_{d_i} - B_{u_i})}{N\left(Et_u + Et_d - 2NT_\ell - \sum\limits_{i=1}^{N}(B_{d_i} + B_{u_i})\right)^2} \quad (22)$$

The oscillator used to establish the blanking period is not sufficiently stable over a long period to justify presetting a fixed blanking period into the equation used by meter 10 to calculate flow velocity. However, the oscillator is sufficiently stable to justify an assumption that the blanking periods established in a measurement cycle and those of the immediately preceding cycle are all equal to each other. Therefore, equation (22) can be simplified to:

$$V = \frac{K(Et_u - Et_d)}{N\left(Et_u + Et_d - 2NT_\ell - \sum\limits_{i=1}^{N}(B_{d_i} + B_{u_i})\right)^2} \quad (23)$$

The actual values of $B_{d_i}$ and $B_{u_i}$ are used in the denominator of equation (23) because they are readily available.

Alternately, the term

$$\sum_{i=1}^{N} (B_{d_i} + B_{u_i})$$

could be replaced by the term

$$2NB,$$

where B is the blanking time for a single measurement, if the value of B is measured and adjusted with a frequency, such as every other measurement cycle, that is sufficient to ensure that the difference between B and the actual blanking time is too small to cause any noticeable error in the corresponding velocity calculation. Using equation (23) is preferable since with either approach $B_{d_i}$ and $B_{u_i}$ are measured and available, and since use of equation (23) yields more accurate results.

FIG. 4 illustrates two additional time periods that are established within each measurement cycle by system 16. The mute period commences when a receive point 54 is detected and ends before the reception of the next measurement pulse. The mute period consists of two phases, an initial phase that is coextensive with the blanking period and a final phase which extends from the end of the initial phase to the end of the entire mute period. During the mute period system 16 is unable to process any electrical signals. Accordingly, system

27.

16 is prevented from misinterpreting electrical noise as a received measurement pulse. The receive window period commences at the end of the mute period and ends when a receive point 54 is detected by system 16. Only during the receive window period is system 16 able to process electrical signals. The mute period is terminated and the receive window period is commenced just prior to the time at which a measurement pulse is expected to reach a receiving transducer. The length of the mute and window periods is determined by the approximate propagation time of the measurement pulses, which, of course, is susceptible of rough calculation.

The block diagram shown in FIG. 1 depicts system 16 which controls the transmission of measurement pulses, measures and records time periods, and computes flow velocity and volumetric flow rate.

Display 1 represents a conventional sixteen digit alphanumeric display and its associated control logic. Display 1 permits the display of variable system operating parameters identified herein, while system 16 is in its program mode. Display 1 permits display of flow rate and volume information while system 16 is in its operational mode.

Sixteen digit keypad 2 is conventional and permits entering numeric values for the variable system operating parameters into system 16 when system 16 is in the program mode and determining which information display 1 will display when system 16 is in the operational mode.

Co-processor 3 contains the microprocessor which coordinates the functions of display 1 and keypad 2.

Main processor 5 is a conventional multipurpose microcomputer which initiates and coordinates the taking of all measurements by controlling the operation of sonic support circuit 8 and sonic interface circuit 9. A more detailed description of circuits 8 and 9 is provided below. Main processor 5 also coordinates all communications with devices external to system 16. External analog outputs and inputs are controlled by passing information to and from analog interface circuit 7. Volume or flow information to be output is passed from main processor 5 to totalizer output circuit 13. Two external communications ports are also controlled by the main processor 5. One port communicates directly with main processor 5 and the remaining port communicates with main processor 5 through nonvolatile memory 6. Finally, main processor 5 calculates fluid velocity and volumetric flow rate from the information it receives from circuits 8 and 9.

Mailbox memory 4 is shared by both co-processor 3 and main processor 5. All data passing between main processor 5 and co-processor 3 is stored initially in memory 4.

Sonic support circuit 8 receives information from main processor 5, which is also stored in nonvolatile memory 6. When so stored, the information, such as variable operating parameters and volume information, remain stored in system 16 regardless of the availability of energizing power.

29.

0179541

Analog interface 7 provides an interface between the two 4-20mA outputs and inputs and main processor 5. Analog interface 7 includes the necessary converters to convert digital signals received from processor 5 to analog signals for submission to external analog devices and to convert analog signals received from external analog devices to digital signals for submission to processor 5.

Power supply 11 provides power for both the digital and analog portions of system 16. Also, power supply 11 receives signals from nonvolatile memory 6, which is controlled by main processor 5, which pertain to the desired magnitude of the measurement pulses transmitted by transducers 40 and 42.

Totalizer output circuit 13 receives binary signals from main processor 5. Totalizer circuit 13 produces a number of electrical pulses equal to the value of the binary number it receives. The pulses are made available to other desired external devices.

Sonic support circuit 8 sends electrical transmit signals to sonic interface circuit 9. Each time interface circuit 9 receives a transmit signal, it causes a transducer 40 or 42 to transmit a measurement pulse. Interface circuit 9 submits an electrical receive signal to support circuit 8 each time circuit 9 detects a receive point 54 of a receive signal 55 generated by a receiving transducer when it receives a measurement pulse. Support circuit 8 records total blanking time and cycle time and makes available all the recorded information to main processor 5. Main processor 5 initiates a measurement cycle by transmitting a command to sonic support

30.

circuit 8 which causes it to generate the first transmit signal for the measurement cycle, and reads the information recorded by support circuit 8 at the end of the measurement cycle.

As is stated above, sonic interface circuit 9 transmits receive signals to sonic support circuit 8. Further, sonic interface circuit 9 provides a signal to main processor 5 which is used to determine the level of energizing power which should be applied to a transmitting transducer during the next measurement cycle to produce measurement pulses of a desired amplitude which renders the pulses suitable for processing.

The apparatus contained in each of blocks 1 through 7, 11 and 13 is conventional and will not be described in further detail herein.

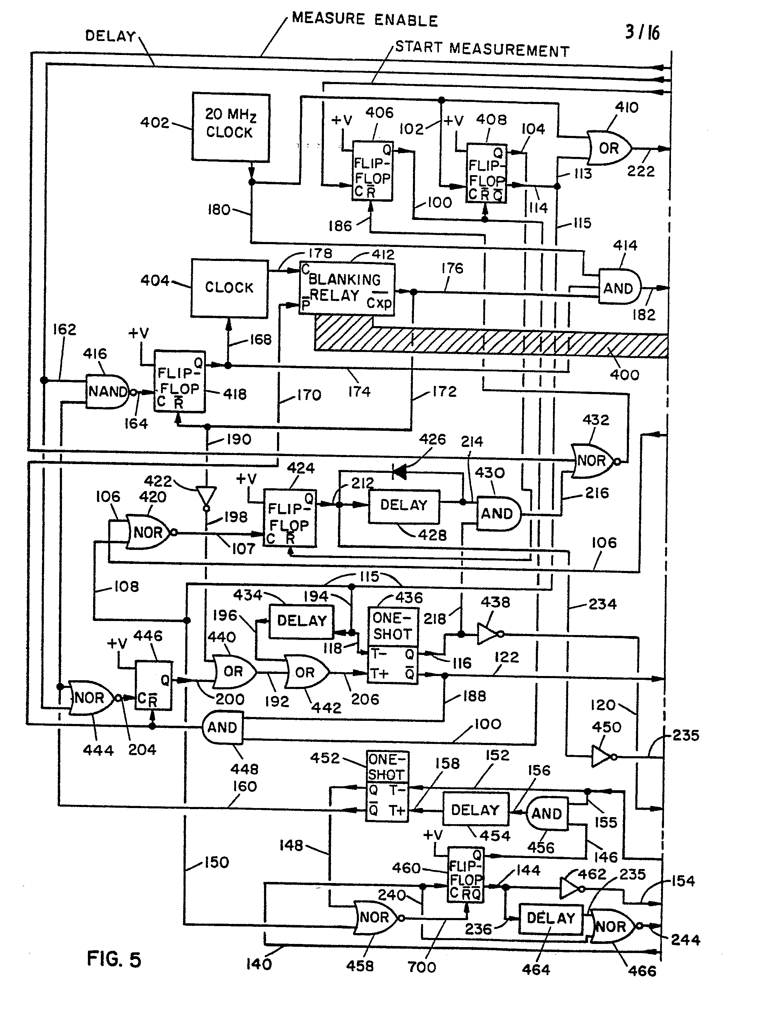

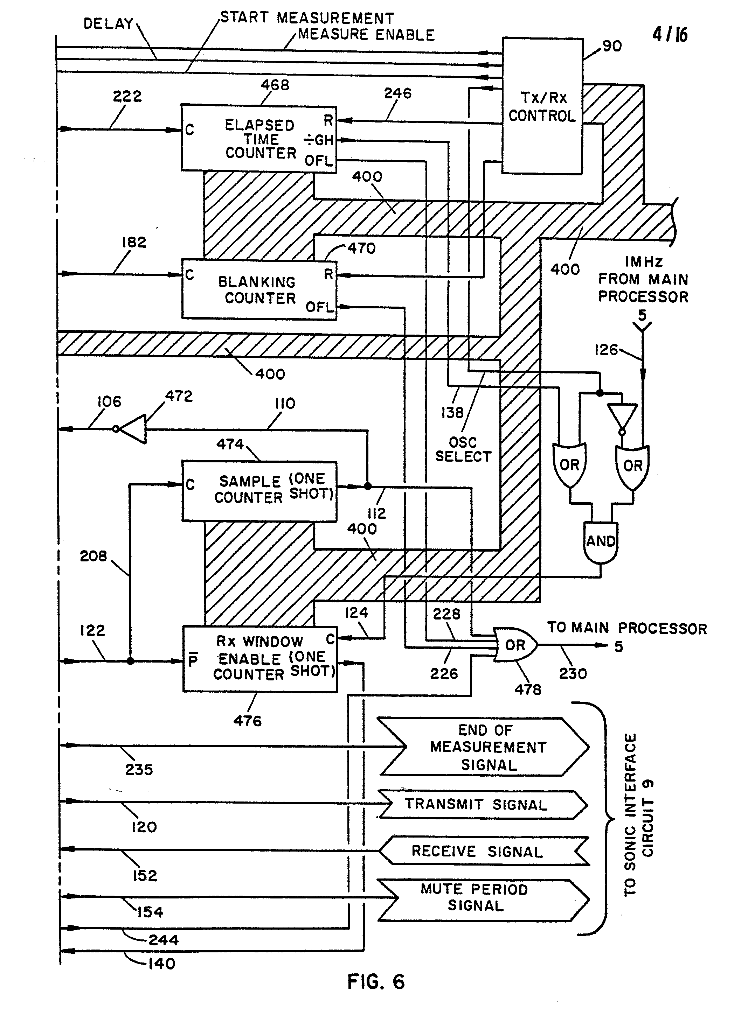

FIGS. 5 and 6 show the details of sonic support circuit 8. The counters of circuit 8 described below can be hardwired or software counters. Clock 404 establishes the blanking period by decrementing a counter 412 that is set, prior to the commencement of each measurement, with a predetermined number, referred to as the blanking count. The blanking count and the frequency at which clock 404 oscillates determine the length of the blanking period. Clock 404 can be started and stopped at precise times, but has a frequency which may drift from its rated frequency. Therefore, each blanking period can vary somewhat in duration from the theoretical duration determined by the rated frequency of clock 404 and the blanking count. Clock 402 is not used to establish the blanking period because its inability to start and stop at sufficiently precise times

31.

IFFICES
YEAGER. P.C.
R BUILDING
H. PA 15219

would introduce time errors which could be greater than the expected propagation times differences. However, because clock 402 oscillates at a very precise frequency, it can be used to accurately measure each blanking period established by clock 404. Blanking counter 470 is used to accumulate the blanking time for each measurement cycle. Prior to each cycle, blanking counter 470 is reset to zero. While counter 412 is being decremented, blanking counter 470 is being incremented by clock 402. Accordingly, the count contained by blanking counter 470 at the end of a measurement cycle can be used, along with the frequency of clock 402, to calculate the blanking time. At the end of the cycle, processor 5 reads the blanking counter and calculates the blanking time for the cycle.

Elapsed time counter 468 is used to measure the cycle time for each upstream and downstream measurement cycle. Counter 468 is reset to zero prior to the commencement of each measurement cycle, and it is incremented continually by clock 402 from the time at which the measurement cycle begins until the time it is terminated.

Sample counter 474 determines the number of measurements constituting a measurement cycle. Prior to the commencement of each measurement cycle, sample counter 474 is set to a value equal to the number of desired measurements in a measurement cycle. At the end of each measurement, sample counter 474 is decremented. When sample counter 474 reaches zero, the measurement cycle is terminated and processor 5 reads elapsed time counter 468 and blanking counter 470, and calculates flow velocity.

Equation (23) can be rewritten as follows to reflect the manner in which system 16 actually calculates velocity from equation (23):

$$V = \frac{K(Et_u - Et_d)}{N(Et_u + Et_d - 2NT_\ell - B_u - B_d)^2} \qquad (24)$$

Where:

$$B_u = \sum_{i=1}^{N} B_{u_i}, \quad \text{and} \quad B_d = \sum_{i=1}^{N} B_{d_i}$$

Therefore, $B_U$ represents cycle blanking time determined from the count contained in blanking counter 470 at the end of a measurement cycle, and the frequency of clock 402. Similarly, the $B_D$ represents the cycle blanking time determined from the count in blanking counter 470 at the end of a downstream measurement cycle and the frequency of clock 402. $Et_u$ is the count contained in elapsed time counter 468 at the end of an upstream measurement cycle, which is converted to time using the frequency of clock 402 and $Et_d$ is the count in elapsed time counter 468 at the end of a downstream measurement cycle converted to time using the frequency of clock 402. The value for N in equation (24) used by processor 5 is the value set into sample counter 474 at the beginning of the measurement cycle. Accordingly, at the end of each measurement cycle, processor 5 reads blanking counter 470 and elapsed time counter 468, and uses the frequency of clock 402 and the count set into sample counter 474 at the beginning of each measurement cycle to calculate flow velocity according to equation (24).

Window enable counter 476 establishes the length of the final phase of the mute period. As is explained in more detail below, counter 476 is set at the beginning of each measurement with a count that permits clock 402 to decrement counter 476 through elapsed time counter 468 or the 1 MHz clock produced by main processor 5 to cause counter 476 to time out and permit system 16 to process signals received from receiving transducer just prior to the expected arrival at the receiving transducer of the measurement pulse.

The detailed description of the operation of sonic interface circuit 8 and, accordingly, the detailed description of the operation of counters 412, 468, 470, 474 and 476 is provided below. To facilitate the description, the operation of circuit 8 during a typical measurement cycle is described.

Each flip-flop used in system 16 is reset when terminal $\bar{R}$ of the flip-flop receives a falling edge, that is, when a suitable low signal or pulse is applied to terminal $\bar{R}$ of the flip-flop. While it is in its reset mode, the output of the flip-flop at Q is low and at $\bar{Q}$ is high, and any signal applied to the clock input C of the flip-flop will have no effect on the outputs of the flip-flop. When terminal $\bar{R}$ of the flip-flop receives a rising edge, that is when a suitable high signal or pulse is applied to the flip-flop, the flip-flop is

34.

LAW OFFICES
J D. YEAGER. P.C.
PORTER BUILDING
PITTSBURGH. PA 15219

released from the reset mode and it is responsive to the next application of a suitable clock signal to terminal C, and the flip-flop will be clocked - that is, terminal Q will go high and terminal Q̄ will go low - when the rising edge of the next clock signal - a positive signal exceeding a predetermined value - is applied to terminal C. Each flip-flop can be clocked only once after it is released from the reset mode, unless it subsequently reenters and is released from the reset mode. Therefore, to clock a flip-flop twice, it is necessary to place the flip-flop in its reset mode, release it from the reset mode, clock it, place it in the reset mode, release it from the reset mode, and then clock it again.

Each one-shot vibrator used in system 16 is triggered when the signal applied to terminal T- is low and the rising edge of a high signal is applied to terminal T+, or when the signal applied to T+ is high and the falling edge of a low signal is applied to terminal T-. When the vibrator is triggered, it produces a high pulse at terminal Q and a low pulse at terminal Q̄. The pulse width is five microseconds. At all other times the output at terminal Q is low and the output at terminal Q̄ is high.

Prior to the start of each measurement cycle, processor 5 causes, through Tx/Rx control 90, the signal on the Measure Enable line and the Start Measurement line to be high, and the signal on the Delay line to be low. The high signal on the Measure Enable line is applied to NOR gate 432, which produces a low signal on line 186. The low signal on line 186 places flip-flop 406 in its reset mode, and the signal on line 100 is

35.

low. The low signal on line 100 is applied to AND gate 448 and, since the signal on line 188 is high, the signal on line 170 goes low. The low signal on line 100 causes flip-flop 408 to enter the reset mode. The low signal on line 170 places flip-flop 446 into its reset mode and presets the blanking count into counter 412. The low signal on the Delay line is applied to NAND gate 416 by line 162 and, therefore, NAND gate 416 produces a high signal on line 164 which, in turn, applies a rising edge to the clock input of flip-flop 418. Since flip-flop 418 is in the reset mode (line 172 is low), the clock signal has no effect. The high signal on line 160 causes NOR gate 444 to produce a low signal on line 204.

Upon first applying power to circuit 8, there occurs a condition which processor 5 must correct through performance of an initialization procedure. The output of counter 412 at $\overline{Cxp}$ is high whenever the count in counter 412 does not equal zero. However, upon energizing circuit 8, the count of counter 412 is not known. Consequently, the output of $\overline{Cxp}$ is not known and the state of each of lines 168, 172, 174, 176 is uncertain. The worst case would occur when the output of Cxp is high, which releases flip-flop 418 from its reset mode. As is described above, NAND gate 416 produces a high, or clock signal, flip-flop 418 is clocked, and line 166 carries a high signal. The high signal on line 168 would start clock 404 which would cause counter 412 to begin decrementing. Thus, blanking counter 470 would have a positive count before the measurement cycle begins. To prevent the described condition from occurring, circuit 8 is first initialized by processor 5.

LAW OFFICES
RT D. YEAGER, P.C.
PORTER BUILDING
BURGH, PA 15219

Processor 5 performs the first step of the initialization procedure by setting the blanking count in counter 412 to zero via data bus 400 and Tx/Rx control 90. Since the count in counter 412 is equal to zero, the output of $\overline{Cxp}$ becomes low. The signal on line 176 is low and blanking counter 470 cannot be incremented. Line 172 also carries a low signal, which places flip-flop 418 in its reset mode. Consequently, lines 168, 178 and 174 are cleared of any high signals which would cause the count in blanking counter 470 at the beginning of a measurement to be inaccurate. At this point, counters 468 and 470 are reset to zero by processor 5 by applying a high pulse to terminal R of each counter 468 and 470 along lines 246 and 248. The pulse is applied to counters 468 and 478 by main processor 5 through Tx/Rx control 90.

To begin each measurement cycle Tx/Rx control 90 causes the signal on the Measure Enable line to go low and causes the signal on the Delay line to go high. The low signal on the Measure Enable line and the low signal produced on line 216 by AND gate 430 are applied to NOR gate 432 and, thus, NOR gate 432 produces a high signal on line 186. The signal on line 218 is low because the output of vibrator 436 at terminal Q is low. The high signal on line 186 releases flip-flop 406 from its reset mode. The high signal on the Delay line ensures that the output of NOR gate 444 will be low, and causes the output of NAND gate 416 to be low until a low signal occurs on line 160, which signals the receipt of a measurement pulse by the receiving transducer and the commencement of the blanking period for the measurement.

Processor 5 loads the blanking count into counter 412.
It should be noted that the blanking count must be loaded into
counter 412 only while the signal on line 170 is low, that is,
while counter 412 is in its preset mode. Since the count in
counter 412 is not equal to zero, the output of counter 412 at
$\overline{Cxp}$ is high and lines 172 and 176 carry high signals. The
high signal on line 172 releases flip-flop 418 from its reset
mode. A high signal is carried by line 190. Inverter 422
causes the signal on line 198 to go low and, since the
flip-flop 446 is in its reset mode, the signal on line 200 is
low, and OR gate 440 causes the signal on line 192 to go
low. Line 196 carries a high signal since flip-flop 408 has
not yet been clocked by clock 402 and its output at $\overline{Q}$ is
high. Therefore, OR gate 442 produces a high signal on line
206 and the output of vibrator 436 at Q is low - which
indicates the absence of a transmit signal - and at $\overline{Q}$ is high
- which presets counter 476 and permits loading of the window
count into counter 476 by processor 5. Circuit 8 is ready to
begin the first measurement of the cycle.

To begin the first measurement cycle by causing the
transmitting transducer 40 or 42 to transmit a measurement
pulse, a low pulse is applied to flip-flop 406 along the Start
Measurement line. The trailing edge of the low pulse clocks
flip-flop 406, which was previously released from its reset
mode, as is described above. The high signal at terminal Q of
flip-flop 406 releases flip-flop 408 from its reset mode so
that the rising edge of the next clock pulse from clock 402
will clock flip-flop 408. Line 100 applies the high signal

LAW OFFICES
ERT D. YEAGER. P.C.
PORTER BUILDING
TSBURGH. PA 15219

from flip-flop 406 to AND gate 448. Since the output of vibrator 436 at terminal $\bar{Q}$ is high, AND gate 448 produces a high output along line 170, which releases flip-flop 446 from its reset mode and releases counter 412 from its preset mode.

Flip-flop 408 is clocked by clock 402 and line 104 applies a high signal to flip-flop 424 to release it from its reset mode. The low signal produced at terminal $\bar{Q}$ is applied

to OR gate 410 along lines 114 and 113. Accordingly, line 222 is high only during the times when a clock pulse is being applied to OR gate 410 and, essentially, OR gate 410 gates the clock pulses produced by clock 402 to counter 468 to begin accumulating the elapsed time count for the measurement cycle. Counter 468 will record the production of pulses by clock 402 as long as line 113 remains low. Therefore, line 113 will be raised to a high condition at the end of the cycle and counter 468 will contain the elapsed time count at that time.

Line 115 also receives the low signal on line 114. The signals on lines 113, 114 and 115 remain low during the entire measurement cycle. Lines 194 and 118 carry the falling edge created when the signal produced at terminal $\bar{Q}$ of flip-flop 408 falls from a high value to a low value to terminal T- of

vibrator 436 five microseconds before the falling edge reaches terminal T+.

The five microsecond delay exists because the low signal

produced at terminal $\bar{Q}$ of flip-flop 408 passes directly to terminal T- of vibrator 436, but reaches terminal T+ only after passing through delay 434. During the delay, a high

V OFFICES
D. YEAGER, P.C.
ITER BUILDING

signal is applied to terminal T+ and terminal T- experiences the falling edge of the low signal. Consequently, a positive transmit signal is sent along line 116, while counter 476 is preset. It should be noted that vibrator 436 produces a pulse at terminal Q, but that inverter 438 converts the high, or positive transmit pulse to the normal negative transmit pulse which is provided to support circuit 9 along line 120. The high pulse on line 218 also is applied to AND gate 430 but produces no change to its output signal due to the low output at terminal Q of flip-flop 424 (flip-flop 424 was released from its reset state by the high signal on line 104, and will not be clocked until the count in counter 474 reaches zero at the end of the measurement cycle). Consequently, the output of NOR gate 432 remains high. After the five microsecond delay, lines 196 and 206 receive the low signal from line 194, whereby vibrator 436 is disabled, and the outputs at Q and Q are low and high, respectively.

When one-shot 436 produces a high pulse along line 116, a low pulse is, therefore, produced along line 122. The low pulse is transmitted to the sample counter 474 along line 208. Counter 474 decrements by one each time it receives a rising edge along line 208 and, therefore, decrements each time it receives the trailing edge of a transmit pulse from vibrator 436. Main processer 5 presets sample counter 474 with the sample count - which represents the number of measurements constituting the measurement cycle. When sample counter 474 decrements to zero it will produce a high pulse on line 112 to signal the end of the cycle.

The low pulse produced at terminal $\overline{Q}$ of vibrator 436 is also applied to window enable counter 476. The pulse presets window enable counter 476 to permit loading it with the window count. The window count is predetermined and set into counter 476 by processor 5 via bus line 400 and is used to establish the final phase of the mute period. During the mute period the signal on line 154 is low and sonic interface circuit 9 is unable to process a receive signal transmitted to circuit 9 from the receiving transducer. When counter 476 decrements to zero, the mute period ends and the receive window period begins.

The rate at which counter 476 is decremented is determined by the state of the signal on the OSC Select line. When Tx/Rx control 90 transmits a high signal on the OSC Select line, 1 MHz pulses from main processor 5 are transmitted along lines 126 and 124 to counter 476. When Tx/Rx control 90 transmits a low signal on the OSC Select line, pulses are transmitted to counter 476 along lines 138 and 124 from elapsed time counter 468. Counter 468 reduces the frequency of the 20 MHz pulses produced by clock 402 to 312.5 kHz. The higher frequency pulses produced by processor 5 are used to decrement counter 476 when the meter is used to measure the velocity flowing through a relatively small conduit and the duration of the final mute phase must be longer than could be represented by the capacity of counter 476 and the 1 MHz frequency of the pulses produced by processor 5.

The low pulse produced at terminal $\overline{Q}$ of vibrator 436 is transmitted along line 188 to AND gate 448. The high signal on line 100 and the low pulse on line 188 cause AND gate 448 to produce a low pulse on line 170. The low pulse on line 170 resets and then releases flip-flop 446, and presets and then releases counter 412. Therefore, flip-flop 446 can be clocked and counter 412 can be decremented.

While counter 476 is being decremented, lines 140, 148 and 150 are all transmitting low signals. As a result, the output of NOR gate 458 on line 113 is high and flip-flop 460 is released from its reset mode. The output of flip-flop 460 at terminal $\overline{Q}$ is high. Inverter 462 changes the high signal on line 144 to a low signal on line 154, which prevents interface circuit 9 from processing receive signals produced by transducers 40 and 42.

When counter 476 decrements to zero, counter 476 transmits a high pulse along line 140. This pulse clocks flip-flop 460, causing a low signal to be transmitted along line 144. Inverter 462 produces a high signal on line 154 which enables sonic interface circuit 9 to permit it to process receive signals it receives from transducers 40 or 42.

The receive signal, - a low pulse - is transmitted to circuit 8 along line 152 by circuit 9 when the measurement pulse, which was created when circuit 8 produced the transmit pulse, is received by the receiving transducer 40 or 42. Delay 454 ensures that terminal T+ of vibrator 452 remains high until terminal T- receives the falling edge of the receive signal and produces a positive pulse on line 148 and a

AW OFFICES
IT D. YEAGER. P.C.
ORTER BUILDING

negative pulse on line 160. Subsequently, the low pulse on line 152 reaches terminal T+ of vibrator 452 through AND gate 456 and lines 155, 156 and 158, which disables vibrator 452.

The high pulse output from vibrator 452 on line 148 causes NOR gate 458 to produce a low pulse on line 113. The low pulse is applied to flip-flop 460 along line 113 and the low pulse resets and releases flip-flop 460. Releasing flip-flop 460 from its reset mode also causes production of a low signal on line 146, which ensures that vibrator 452 will remain disabled until counter 476 clocks flip-flop 460 when the next final mute phase ends. The signal on line 144 becomes high and inverter 462 produces a low signal on line 154. The low signal on line 154 is transmitted to sonic interface circuit 9 to begin the initial mute phase. Circuit 9 will remain disabled until the next time counter 476 decrements to zero to terminate the final mute phase.

The low pulse output from vibrator 452 has no effect on the output of NOR gate 444, since the signal on the Delay line remains high, but causes the output of NAND gate 416 to become high. When flip-flop 418 receives the rising edge from NAND gate 416, along line 164, it is clocked and its output at Q becomes high. The high signal produced on line 174 by flip-flop 418 is carried to AND gate 414. Since the signal on line 176 is high, AND gate 414 will pass clock pulses from clock 402 to counter 470 until counter 412 decrements to zero. When counter 412 decrements to zero, the signal on line 176 becomes low, and AND gate 414 cannot pass to counter 470 clock pulses produced by clock 402. The high signal produced

44

at terminal Q by flip-flop 418 is also transmitted to clock 404 along line 168. The high signal on line 168 enables clock 404 to cause clock 404 to begin applying pulses to terminal C of counter 412, along line 178, to decrement it. Thus counter 412 begins to decrement the blanking count to initiate the blanking period.

When counter 412 decrements to zero the output of Cxp becomes low. Line 176 applies the low signal to AND gate 414 which produces a low signal on line 182, which prevents clock 402 from further incrementing blanking counter 470. Accordingly, the blanking period has ended and the count in counter 470 is the blanking count.

The low signal from counter 412 is carried also by line 172 to flip-flop 418 to place it in its reset mode. The signal on line 172 is transmitted also by line 190 to inverter 422. Inverter 422 produces a high signal on line 198 which is applied to OR gate 440. OR gate 440 produces a high signal on line 192 which is applied to OR gate 442. The rising edge of the high signal produced by OR gate 442 is applied to terminal T+ of vibrator 436. Since a low signal is applied to terminal T-, vibrator 436 is enabled and, accordingly, produces another transmit signal at terminal Q, which is transmitted to sonic interface circuit 9. A low pulse is again sent along line 188 by vibrator 436 to preset and release counter 412. The output of C̄x̄p̄ again becomes high and flip-flop 418 is released and vibrator 436 is disabled. The operation of circuit 8 described above is repeated until a number of measurements have been taken which is equal to the sample count set in counter 474 at the beginning of the cycle.

W OFFICES
D. YEAGER. P.C.
RTER BUILDING
JRGH. PA 15219

The end of the measurement cycle occurs when the count in sample counter 474 reaches zero, at which time a high pulse is produced on line 112. Inverter 472 converts the high pulse on line 172 to a low pulse, which is applied to NOR gate 420 along line 106. The input to NOR gate 420 on line 108 is low during the application of the low pulse and, accordingly, NOR gate 420 produces a high pulse on line 107. Line 107 carries the high pulse to flip-flop 424 and flip-flop 424 is clocked. Therefore a high signal is produced on line 212. Line 234 transmits the high signal carried by line 212 to inverter 450. Inverter 450 produces a low signal on line 235. The low signal on line 235 is transmitted to sonic interface circuit 9. Circuit 9 interprets a low signal on line 235 as an indication that the measurement cycle has been terminated.

Line 212 carries the high output from flip-flop 424 to delay 428, which delays the application of the high signal to AND gate 430 for 50 microseconds. The 50 microsecond delay allows sonic support circuit 8 to accumulate the elapsed time and blanking time for the last measurement before the input to the blanking counter 470 and elapsed time counter 468 are blocked at the end of the cycle.

OR gate 410 blocks the input to elapsed time counter 468 when flip-flop 408 is reset and terminal $\overline{Q}$ produces a high signal on line 114, which is applied to OR gate 410 on line 113. AND gate 414 blocks the input to blanking counter 470 when flip-flop 418 is reset and terminal Q applies a low signal to AND gate 414 along line 174. Both flip-flops 418 and 408 are reset when line 214 is high and AND gate 430 receives a positive pulse along line 218 from vibrator 436. AND gate 430 produces a high signal on line 216 which causes NOR gate 432 to produce a low signal on line 186 which resets flip-flop 406. Flip-flop 406 produces a low signal at terminal Q which resets flip-flop 408. Flip-flop 408 produces a high signal on line 114 which is applied to OR gate 410 along line 113. OR gate 410 produces a high signal on line 222 which blocks the clock pulses produced by clock 402 from elapsed time counter 468. Delaying application of a high signal along line 214 to AND gate 430 for 50 microseconds prevents the high pulse produced on line 218 when the last transmit signal of the cycle is produced from causing AND gate 430 to produce a positive pulse on line 216 until the last receive signal is received on line 152 and another transmit signal is produced. The final transmit signal is not used to take a measurement, but is used to produce a final positive pulse on line 218 which causes the input to the elapsed time counter 468 to be blocked and resets and releases flip-flops 406 and 408 to prepare them for the next measurement cycle. Accordingly, the count in the elapsed time counter 468 at the end of a measurement cycle, when converted to time by the frequency of clock 402, represents the time elapsing between the transmission of the first measurement pulse and a final measurement pulse which immediately follows the last measurement pulse used by system 16 to calculate flow velocity for that cycle. It should be noted that the final measurement pulse is ignored for calculation purposes. Diode 426 is provided to ensure that the 50 microsecond delay is not imposed when the signal on line 214 goes from high to low, which would cause the circuit 8 to shut down when the first transmission pulse is generated.

When the transmit signal for the final measurement pulse is generated by vibrator 436, flip-flop 406 is reset through AND gate 430 and NOR gate 432. The signal on line 100 becomes low and flip-flops 408 and 446 are reset and counter 412 is preset. Resetting flip-flop 408 causes the signal on line 114 to become high. The high signal on line 114 is applied to OR gate 410 with the result that elapsed time counter 468 receives a constant high signal and stops counting the total elapsed time of the measurement cycle. Line 115 transmits the high signal to line 194. The high signal on line 194 is applied to virbrator 436 and vibrator 436 is disabled until the signal on line 115 again becomes low. Whenever line 115 is high, transmit pulses will not be produced. The high signal on line 115 is applied to NOR gate 458 along line 150. NOR gate 458 produces a low signal on line 113 which places flip-flop 460 in its reset mode to ensure that line 154 is low and sonic interface circuit 9 ·is disabled. Finally, the high signal on line 115 is applied to NOR gate 420 along line 108 to enable NOR gate 420 to clock flip-flop 424 at the end of the next measurement cycle to end the cycle. When flip-flop 408 is reset by flip-flop 406 at the end of the cycle, the signal on line 104 becomes low and flip-flop 424 is placed in a reset mode. Flip-flop 424 will be released at the beginning of the next cycle to permit NOR gate 420 to clock it at the end of the cycle.

LW OFFICES
F D. YEAGER. P.C.

The high pulse produced by sample counter 474 when it is decremented to zero is applied to OR gate 478 along line 112. OR gate 478 produces a high pulse on line 230, which carries the high pulse to main processor 5. The high pulse on line 230 causes processor 5 to check counters 468 and 470 to determine if any abnormal conditions have occurred. If no abnormal conditions have occurred, processor 5 reads counter 474 to determine whether its count is zero. If the count in counter 474 is zero, processor 5 reads elapsed time counter 468 and blanking counter 470 to obtain the parameters necessary for calculation of the fluid velocity. If the count in counter 474 is not zero, and no abnormal conditions exist with respect to counters 468 and 470, processor 5 assumes that a transmitted measurement pulse was not received during the expected time by a receiving transducer.

OR gate 478 produces signals on line 230 which indicates that the receive window period terminated before the receive signal, which should have been generated when a transmitted measurement pulse was received by a receiving transducer 40 or 42, was processed by circuit 8. When counter 476 is decremented to zero, the final mute phase has ended and the window period begins. Counter 476 produces a positive pulse on line 140 which clocks flip-flop 460. The positive pulse produced by counter 476 has a width that is equal to the maximum allowable window period duration. If a receive signal is generated before line 140 goes low, the window period is terminated by circuit 8. Otherwise, the window period is terminated when line 140 is made to go low by processor 5,

48.

which aborts the measurement and begins a new measurement cycle, as is described above. When flip-flop 460 is clocked, it produces a high signal on line 146 which is applied to AND gate 456 as is the high signal on line 152. AND gate 456 applies a high signal to terminal T+ of vibrator 452 along lines 156 and 158 through delay 454 to enable vibrator 452. Accordingly, the next low pulse received along line 152, when a receiving transducer 40 or 42 receives a measurement pulse, will trigger vibrator 452. Flip-flop 460 also causes a low signal to be produced on line 144 which is applied to inverter 462. Inverter 462 produces a high signal on line 154 which permits circuit 9 to process receive signals. Flip-flop 460 also causes the signal on line 236 to be low. Delay 464 causes the signal on line 238 to go low 2.5 microseconds after the signal on line 236 goes low. The positive pulse produced on line 140 by counter 476 is transmitted by line 240 to NOR gate 466. Therefore, the output of NOR gate 466 remains low. If a receive signal is not transmitted along line 152 before the signal on line 140 goes low, both inputs to NOR gate 466 will be low, and a high signal, indicating a loss of signal condition, will be produced on line 244. The high signal on line 244 is applied to OR gate 478, and a high signal is transmitted to processor 5 along line 230. Processor 5 checks sample counter 474, and will determine that a cycle has not been completed. Processor 5 will check elapsed time counter 468 and blanking counter 478 and determine that no abnormal conditions are associated therewith. Processor 5 will then assume that a loss of signal

49.

condition has occurred, and will then conclude that a measurement pulse was not received by a receiving transducer 40 and 42. Main processor 5 can take any appropriate action, such as aborting the measurement cycle and initiating a new cycle or shutting down meter 10.

As is stated above, processor 5 checks the status of counter 468 when it receives a high signal on line 230 to determine whether the status of counter 468 produced the high signal on line 230. When the sample count set on sample counter 474 is so high that elapsed time counter 468 overflows during a measurement cycle, counter 468 sets an internal overflow flag and produces a high pulse on line 228. OR gate 478 produces a high pulse on line 230. Processor 5 checks the status of the flag of counter 468 to determine the cause of the pulse, and determines that an overflow condition exists in counter 468. Processor 5 can take appropriate action.

Further, an overflow condition in blanking counter 470 can cause counter 470 to produce a positive pulse on line 226 and, therefore, on line 230. Blanking counter 470 can overflow if the sample count set on sample counter 474 in combination with the blanking count set on counter 412 produce a blanking count in excess of the capacity of blanking counter 470. Blanking counter 470 will set an internal overflow flag and produce a positive pulse on line 226. Processor 5 will detect the set overflow flag and take appropriate action.

When meter 10 is used to measure the velocity of flowing material in large diameter pipes - pipes with a diameter greater than about 16 inches - the blanking period may not be necessary because the volume of material in the pipe will

50.

cause reverberations to attenuate to a harmless level quickly and, consequently, they may not be a problem. Accordingly, where meter 10 is used with a large diameter pipe, no blanking period is imposed within the measurement cycles. To eliminate the blanking period, sonic support ciruit 8 is initialized as described above with the exception that the signal on the Delay line is never raised to a high state. Accordingly, NAND gate 416 will never produce a low signal and AND gate 414 will never apply clock pulses from clock 402 to blanking counter 470. However, counter 412 is still loaded with the blanking count - which is not equal to zero - to ensure that the signal on line 198 is low to permit the state of the signal on line 200 to control the output of OR gate 440 and the state of vibrator 436.

The operation of sonic interface circuit 9 is presented below in the context of its operation during a typical measurement cycle. Operation of interface circuit 9 also is described with a meter 21, an alternate embodiment of the present invention, which is shown in FIG. 1a. Meter 21 includes two pairs of transducers - transducers 40 and 42, and transducers 44 and 46. Meter 21 can be used to measure flow velocity where the flow velocity of the material in the conduit is not symmetrical with respect to the cross section of the material. Meter 21 provides two sonic paths through the material to determine flow velocity at two points of the cross section.

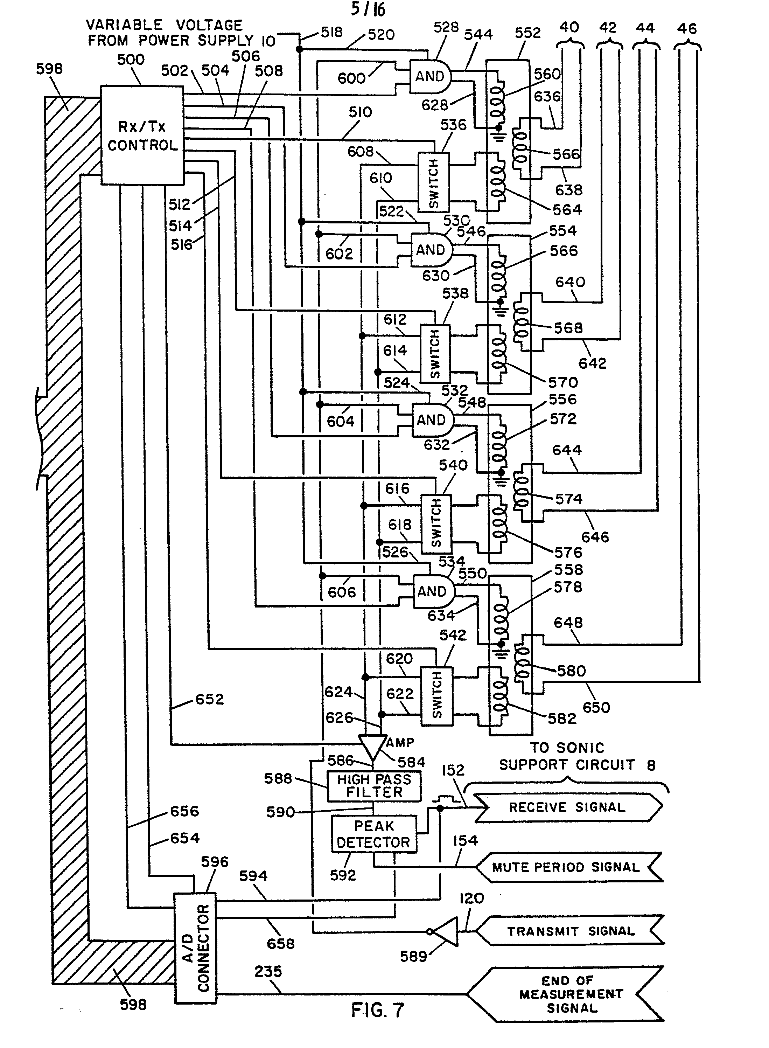

Sonic interface circuit 9 is shown generally in FIG. 7. Circuit 9 communicates directly with transducers 40, 42, 44, and 46. Main processor 5 determines which of transducers 40 and 42, 44 and 46 will transmit and receive sonic pulses during a measurement cycle. During an upstream measurement cycle, either one of transducers 40 and 46 may transmit and either one of transducers 42 and 44 may receive measurement pulses. During a downstream measurement cycle, either one of transducers 42 and 44 may transmit and either one of transducers 40 and 46 may receive measurement pulses. Main processor 5 controls the operation of transducers 40, 42, 44 and 46 through Rx/Tx control 500 via bus line 598. If transducer 40 is chosen to be a transmitter, processor 5 causes Rx/TX control 500 to produce a high signal on line 502. Line 502 applies the high signal to AND gate 528. AND gate 528 also receives inputs along lines 600 and 520. Line 520 communicates with line 518, which carries a variable voltage signal transmitted by power supply 11. Line 600 communicates with line 120 which carries the transmit signal from sonic support circuit 8. When line 502 is high, a negative transmit pulse carried by line 120 will produce a positive pulse after passing through inverter 589, which is applied to coil 560 of transformer 552 by lines 544 and 628. The strength of the signal applied to coil 560 is controlled by the variable voltage signal on line 520. A transmit pulse is induced in coil 566 by coil 560 and applied by lines 636 and 638 to transducer 40. Transducer 40 produces a measurement pulse when it receives a transmit pulse.

52.

If transducer 42 is chosen as a transmitter, processor 5 causes Rx/Tx control 500 to produce a high signal on line 504. Line 504 applies the high signal to AND gate 530, which receives transmit signals along lines 602 and 120 and a variable voltage signal along lines 518 and 522. High pulses produced by AND gate 530 are applied by lines 546 and 630 to coil 566 of transformer 554, which induces coil 568 to produce transmit pulses. A transmit pulse produced by coil 568 is applied to transducer 42 by lines 640 and 642.

If transducer 44 is chosen as a transmitter, processor 5 causes Rx/Tx control 500 to produce a high signal on line 506. Line 506 applies the high signal to AND gate 532 which receives transmit signals along lines 120 and 604 and variable voltage signals along lines 518 and 524. High pulses produced by AND gate 532 are applied to coil 572 of transformer 556 by lines 548 and 632, which induces coil 574 to produce a high pulse. Lines 644 and 646 apply the transmit pulse produced by coil 574 to transducer 44.

If transducer 46 is chosen to be a transmitter, processor 5 causes Rx/Tx control 500 to produce a high signal on line 508. Line 508 applies the high signal to AND gate 534, which receives transmit pulses along lines 120 and 606 and variable voltage signals along lines 518 and 526. High pulses produced by AND gate 534 are applied by lines 550 and 634 to coil 578 of transformer 558, which induces coil 580 to produce a transmit pulse. The transmit pulse is applied by lines 648 and 650 to transducer 46 to cause transducer 46 to create a measurement pulse.

One of lines 510, 512, 514 and 516, corresponding respectively to transducers 40, 42, 44 and 46, receives a low signal when its associated transducer is chosen to act as a transmitter. A low signal on one of lines 510, 512, 514 and 516 causes the corresponding switch 536, 538, 540 or 542 to bar the transmission of receive signals through the switch. To operate a transducer as a receiver, processor 5 causes Rx/Tx control 500 to produce a high signal on the corresponding line 510, 512, 514 or 516, and a low signal on the corresponding line 502, 504, 506 or 508. The high signal on line 510, 512, 514 or 516 causes the corresponding switch 536, 538, 540 or 542 to allow signals to pass therethrough.

If transducer 40 is chosen to operate as a receiver, processor 5 causes Rx/Tx control 500 to produce a low signal on line 502 and a high signal on line 510. The low signal on line 502 is applied to AND gate 528 and, accordingly, high transmit pulses on line 600 will not cause AND gate 528 to produce a high pulse on lines 544 and 628. The high signal on line 510 is applied to switch 536. When transducer 40 receives a measurement pulse, it creates a receive signal which is applied to coil 566 along lines 636 and 638. Coil 566 induces the receive signal in coil 564, which makes the receive signal available to switch 536. If the signal on line 510 is high, switch 536 applies the receive signal to amplifer 584 along lines 608 and 610, and lines 624 and 626.

When transducer 42 receives a measurement pulse, it creates a receive signal which is applied to coil 568 along lines 640 and 642. Coil 568 induces the receive signal in

54.

coil 570, which makes the receive signal available to switch 538. If transducer 42 is chosen to operate as a receiver, processor 5 causes Rx/Tx control 500 to produce a low signal on line 504 and a high signal on line 512. The low signal on line 504 is applied to AND gate 530 and, accordingly, high transmit pulses carried by line 602 are not passed by AND gate 530 to lines 546 and 630. The high signal on line 512 is applied to switch 538, and when switch 538 receives a high receive pulse on line 512 it transmits the receive pulses along lines 612 and 614, and lines 624 and 626 to amplifier 584.

When transducer 44 receives a measurement pulse, it creates a receive signal which is applied to coil 574 along lines 644 and 646. Coil 574 induces the receive signal in coil 576, which makes the receive signal available to switch 540. If transducer 44 is chosen to operate as a receiver, processor 5 causes Rx/Tx control 500 to produce a low signal on line 506 and a high signal on line 514. The low signal on 506 is applied to AND gate 532 and, accordingly, high transmit pulses on line 604 are not passed by AND gate 532 to lines 548 and 632. The high signal on line 14 is applied to switch 540. When switch 540 receives the high signal on line 514, receive signals received by switch 540 are passed by switch 540 to amplifier 584 along lines 616 and 618, and 624 and 626.

When transducer 46 receives a measurement pulse, it applies a receive pulse to coil 580 along lines 648 and 650, which induces the receive pulse in coil 582. Coil 582 makes the receive pulse available to switch 542. If transducer 46

LW OFFICES
T D. YEAGER, P.C.
ORTER BUILDING

is chosen to operate as a receiver, processor 5 causes Rx/Tx control 500 to produce a low signal on line 508 and a high signal on line 516. The low signal on line 508 is applied to AND gate 534 and, accordingly, high transmit pulses from line 606 are not passed by AND gate 534 to lines 550 and 634. The high signal on line 516 is applied to switch 542. When switch 542 receives a high signal on line 516, it applies receive pulses received from coil 582 to amplifier 584 along lines 620 and 622, which transmit the signals to lines 624 and 626.

Only two transducers 40 and 42, or 44 and 46 can be controlled at any one time. Therefore, the remaining description of circuit 9 will concentrate on the operation by circuit 9 of transducers 40 and 42. Operation of circuit 9 during an upstream cycle will be described. Therefore, transducer 40 will be the transmitting transducer, and transducer 42 will be the receiving transducer. Accordingly, lines 502 and 512 will carry high signals and lines 510 and 504 will carry low signals. Since the signal on line 502 is high, transmit pulses received from sonic support circuit 8 along lines 120, through inverter 589 to line 600 will be applied to coil 560 by AND gate 528 along lines 540 and 536. Transformer 552 induces the transmit pulse in coil 566, which applies it to transducer 40 along lines 636 and 638. Transducer 40 converts the transmit pulse to an ultrasonic measurement pulse which is transmitted through the material in housing 12. Transducer 42 receives the measurement pulse and converts it to an electrical receive pulse, which is applied to coil 568 along lines 640 and 642. Coil 568 induces the

56.

receive pulse in coil 570 which applies it to switch 538. Switch 538 applies the receive signal to amplifier 584.

Amplifier 584 is a low noise amplifier which increases the level of the receive pulse to a level which facilitates its detection. The gain of the amplifier is constant throughout the measurement cycle. In large diameter pipes, where receive pulses are attenuated to a great extent by the material in the pipe, processor 5 causes Rx/Tx control 500 to produce a high signal on line 652. The high signal on line 652 causes the gain control of amplifier 584 to increase the gain of the amplifier. Amplifier 584 applies the amplified receive pulse to highpass filter 588 along line 586.

Highpass filter 588 applies the filtered receive pulse to peak detector 592 along line 590. Peak detector 592 also receives the mute signal from sonic support circuit 8 along line 154. When the mute signal on line 154 is low the mute period is in progress and sonic interface circuit 9 is unable to process receive pulses. More specifically, when the mute signal is low, peak detector 592 cannot process a filtered receive pulse applied to it by highpass filter 588. When the mute period ends, the window period begins and the mute signal on line 154 becomes high. Peak detector 592 is able to process the receive pulse. Peak detector 592 analyzes waveform 55 produced by highpass filter 588 to determine a specific point of reference, or receive point. The time at which detector 592 receives the receive point is construed to be the time at which system 16 receives the measurement pulse. A uniform receive point is necessary because the period of the fundamental frequency of the receive pulse is much greater than the propagation time difference. A one period variation in the receive point would destroy the accuracy of the measurements provided by meter 10. To locate the receive point, peak detector 592 determines the peak voltage 56 of the receive pulse. Peak voltage 56 is defined as the first local voltage peak which is immediately followed by a smaller local voltage peak, if the higher local voltage peak exceeds a minimum threshold level. The receive point 54 is the third point following peak voltage 56 at which the receive pulse crosses the time axis (see FIG. 16). Peak detector 592 transmits a receive pulse to sonic support circuit 8 along line 152 at the same time it receives the receive point 54.

The variable voltage signal, which is applied to AND gates 528, 530, 532 and 534, determines the voltage level of the transmit signal and, accordingly, the receive signal. Thus, it is the predetermined values of the variable voltage signal and threshold level of peak detector 592 which act together to ensure determination of peak voltage 56. The variable voltage signal remains constant throughout a single measurement cycle, but can be adjusted from cycle to cycle, depending upon fluctuations in the level of peak voltage 56. Peak detector 592 includes a sample and hold circuit which imposes on line 658 the highest voltage it has received thus far during a measurement cycle. Therefore, at the end of a measurement cycle, the voltage on line 658 represents the highest peak voltage of all pulses constituting the cycle. Simultaneous receipt of the end of measurement signal along

58.

OFFICES
HEAGER. P.C.

line 235 and a receive signal along line 594 causes A/D converter 596 to convert the voltage on line 658 to a binary signal. At the same time, converter 596 generates an interrupt signal along line 656 which is transmitted to Rx/Tx control 500. Rx/Tx control 500 passes the interrupt signal to the main processor 5 via bus line 598. When main processor 5 receives the interrupt signal, it returns a read command to Rx/Tx control 500 which, in turn, produces a low signal on line 654. When A/D converter 596 receives a low signal on line 654, it sends the binary signal to processor 5 along bus 598. The interrupt signal on line 656 is also applied to peak detector 592 along line 655 to clear the sample and hold circuit of detector 592, which resets to zero the signal on line 658.

Main processor 5 compares the value of the highest maximum voltage to a desired value and adjusts the variable voltage signal accordingly. If the maximum voltage is higher than the desired value, by at least a predetermined amount, main processor 5 instructs nonvolatile memory 6 to lower the variable voltage signal. Nonvolatile memory 6 causes power supply 11 to lower the variable voltage signal, which lowers the amplitude of the voltage of the transmit pulse and, accordingly, the receive pulse. If the peak voltage is lower than the desired value, by at least a predetermined amount, main processor 5 instructs nonvolatile memory 6 to raise the variable voltage signal. Thus, the gain of amplifier 584 remains constant and, consequently, the signal to noise ratio of the receive signal is held constant.

59.

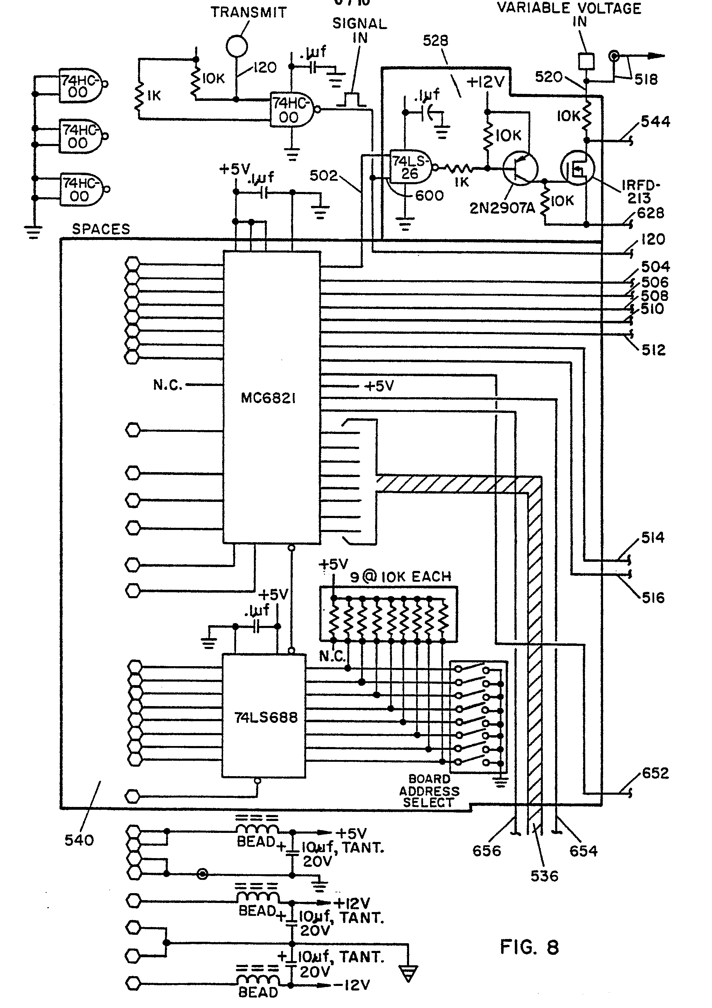

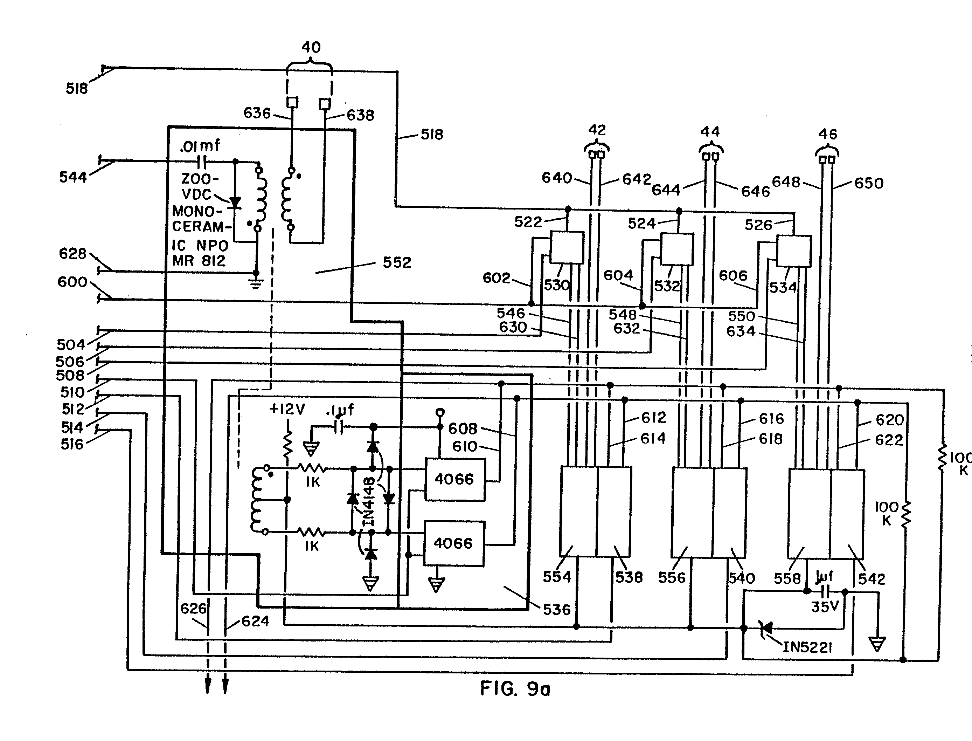

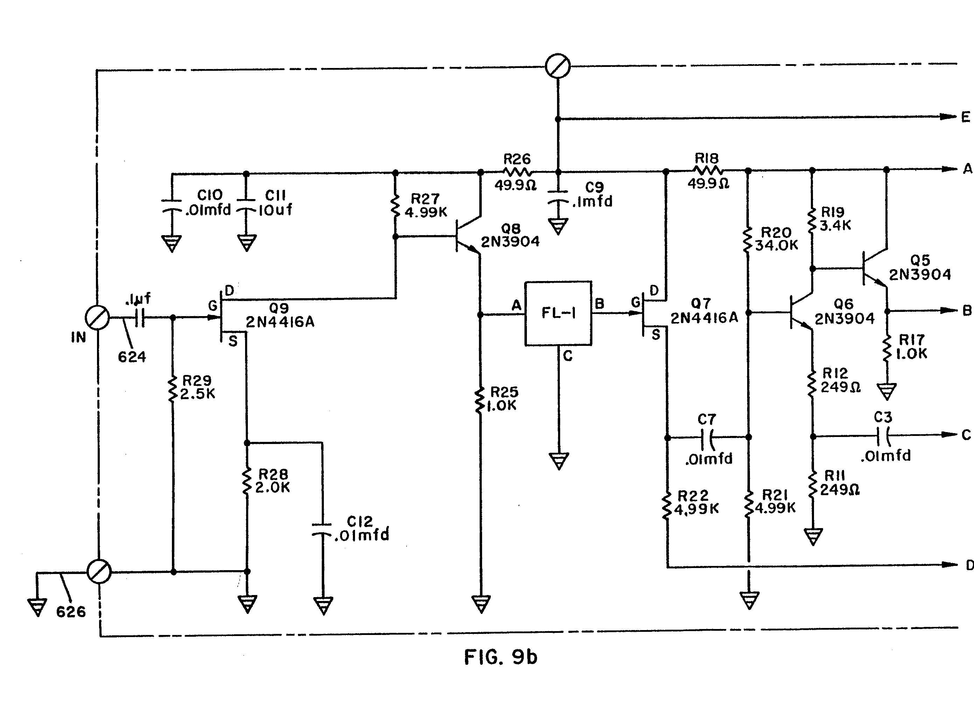

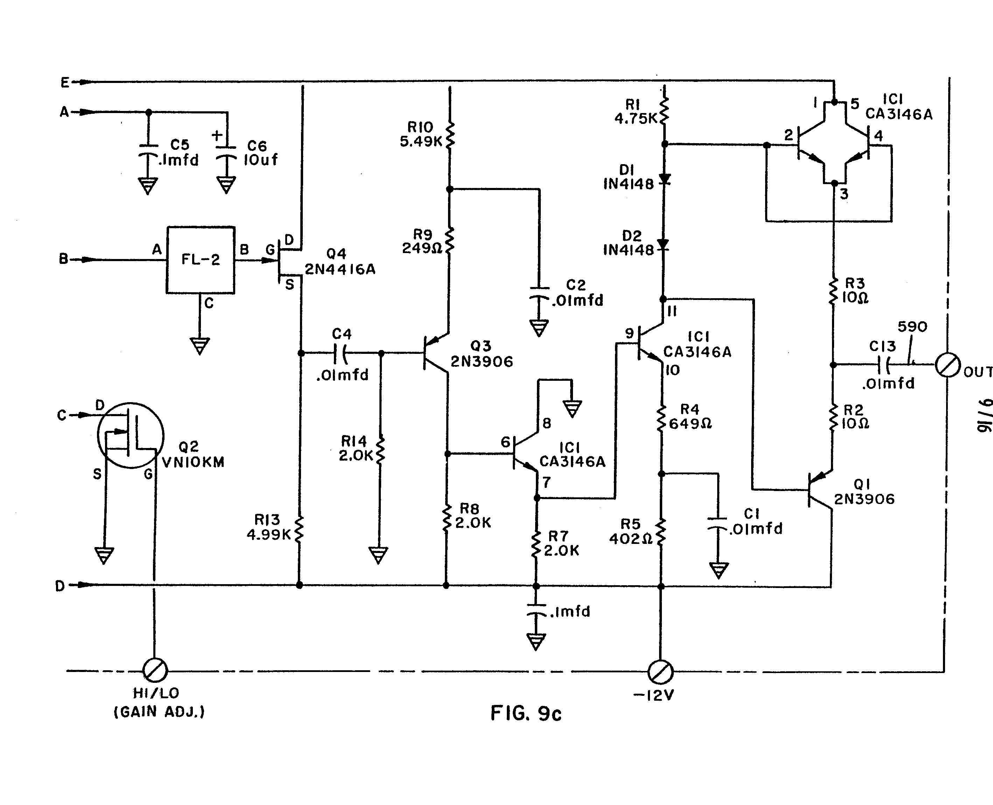

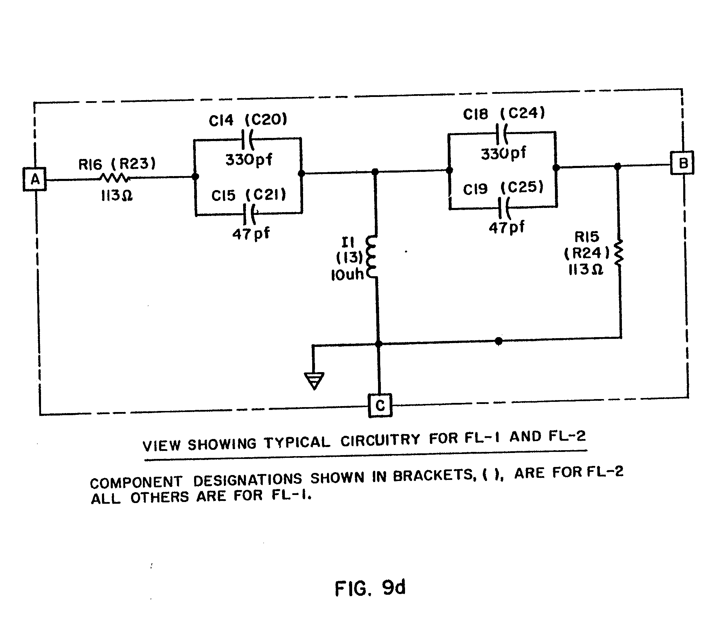

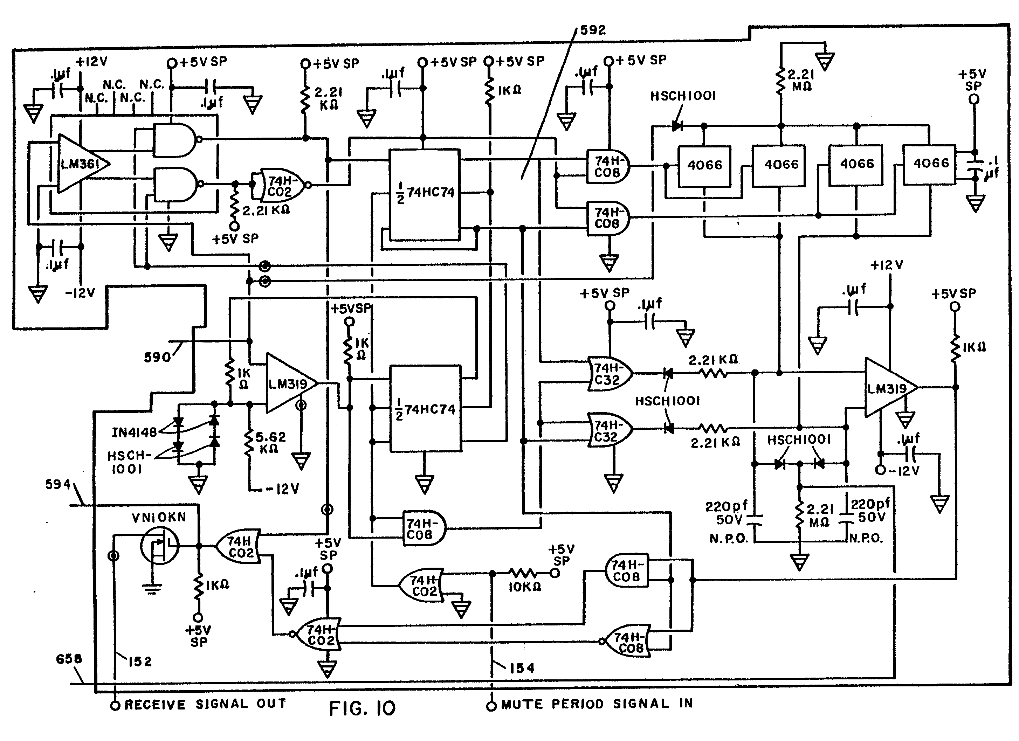

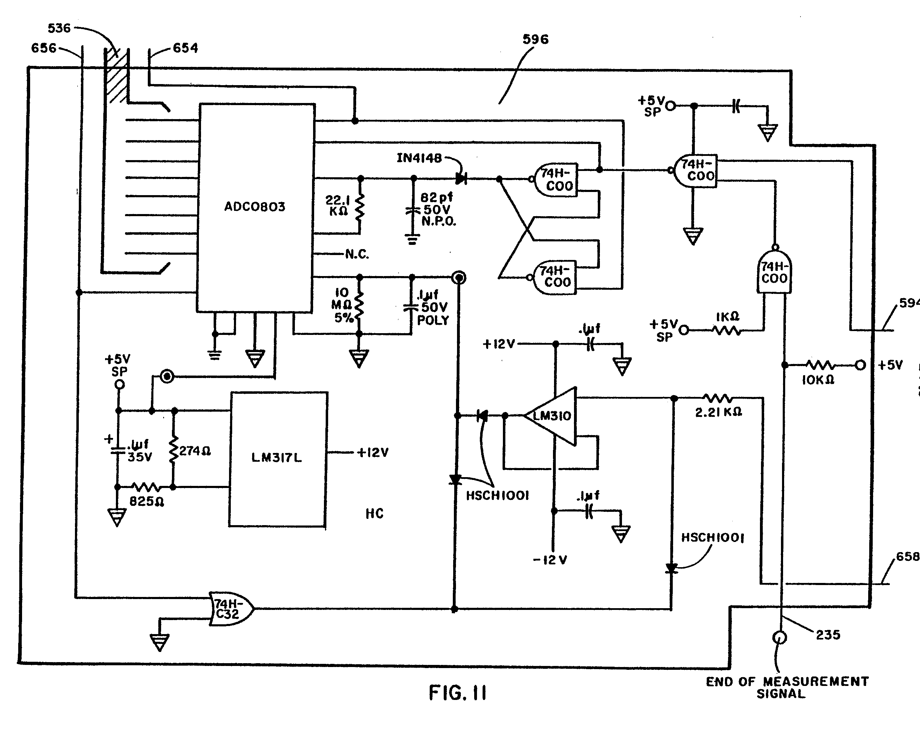

FIGS. 8 through 11 provide schematic diagrams of circuits which are particularly useful for implementing Rx/Tx control 500, amplifier 584, highpass filter 588, peak detector 592, AND gate 528, switch 536 and transformer 552 of sonic interface circuit 9. Also, FIG. 9 illustrates in block form the remaining AND gates, 530, 532 and 534 which are identical to AND gate 528, switches 538, 540, 542, which are identical to switch 536, and transformers 554, 556 and 558, which are identical to transformer 552. Suggested values of the resistors, capacitors, and inductors, and identification numbers for commercially available microcircuits are presented in FIGS. 8 through 11. Those of ordinary skill in the art will readily understand the construction and operation of the circuits shown in FIGS. 8 through 11 upon reviewing those figures and the text of the present application.

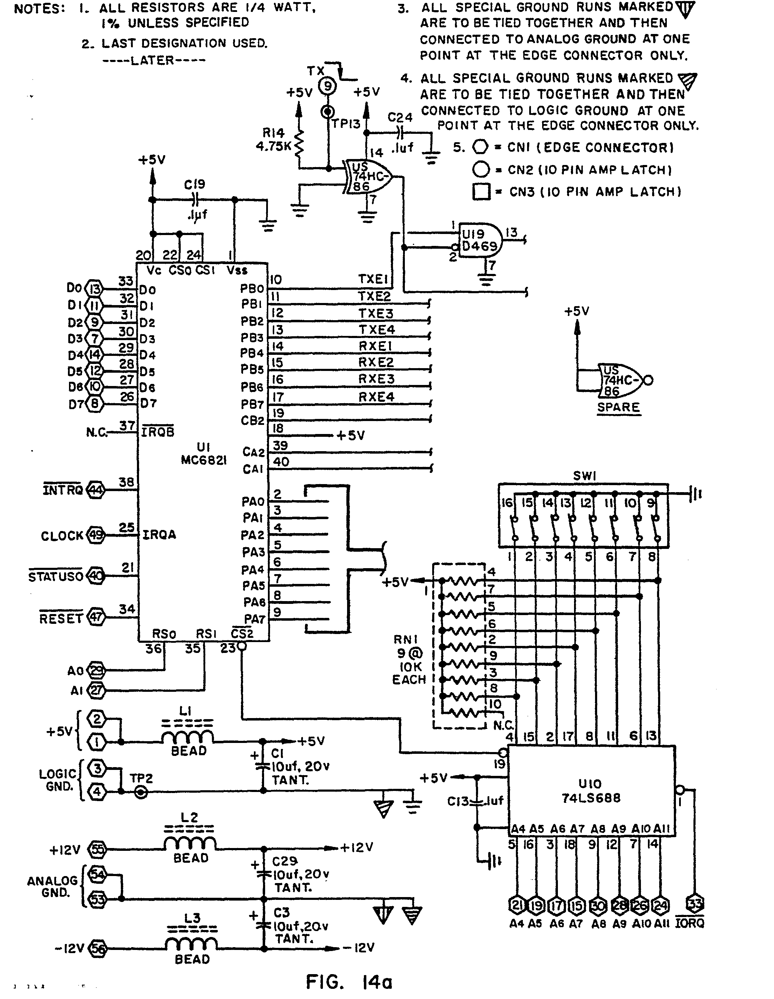

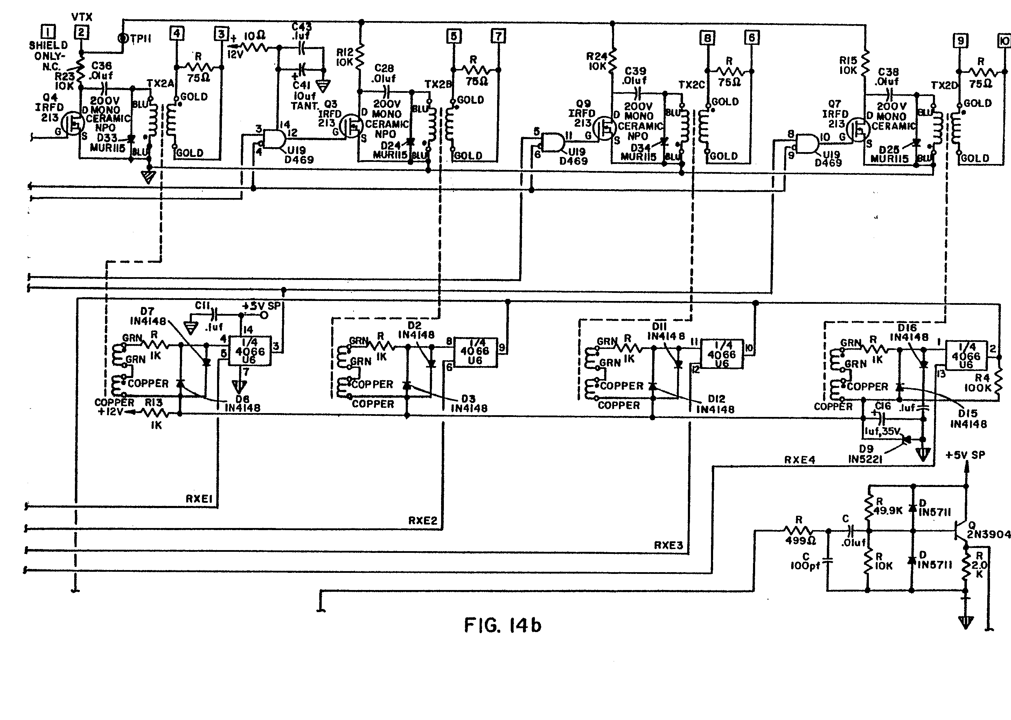

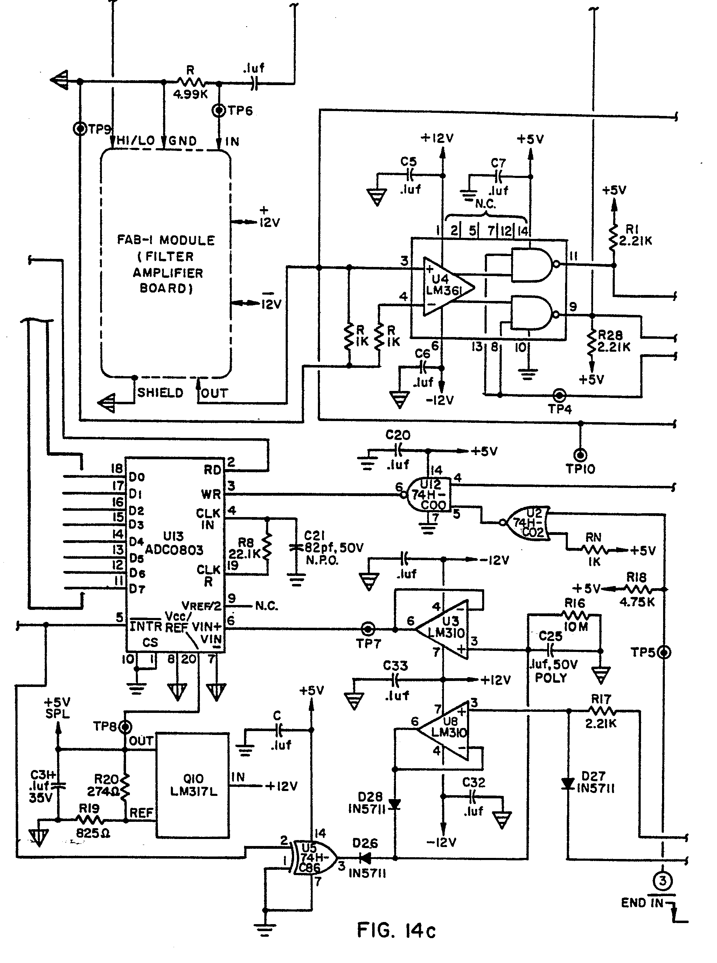

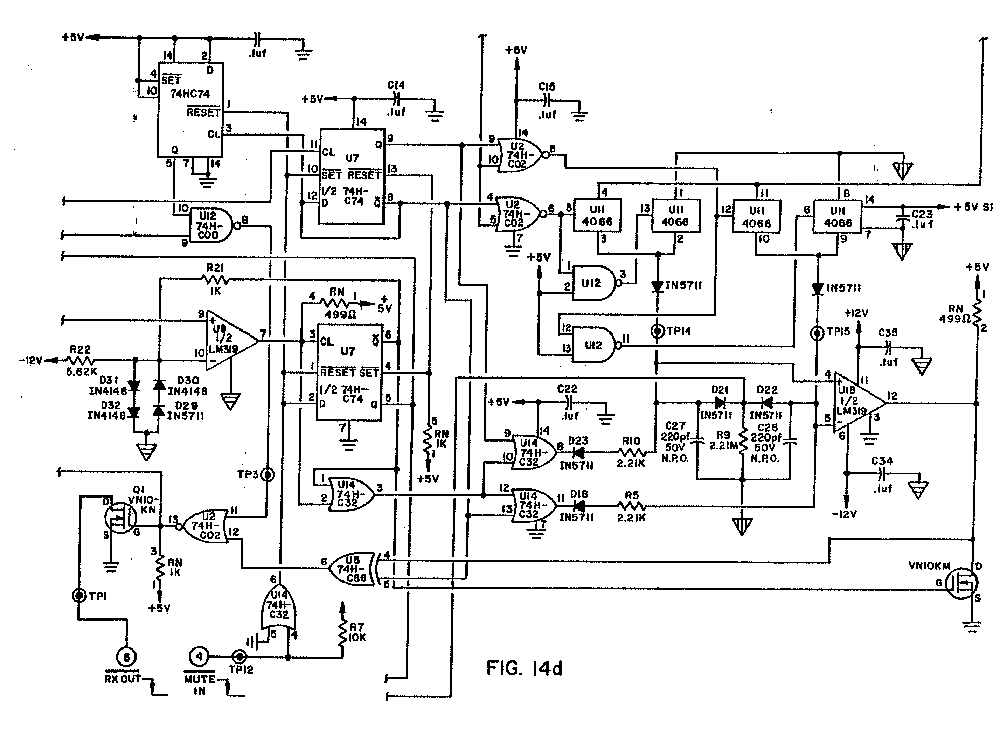

FIGS. 14a, 14b and 14c show a further circuit which can be used to implement circuit 9.

In the preferred embodiment of the invention, software is used primarily to permit communication between processor 5 and the counters of circuit 8. Through software, processor 5 presets the blanking count into counter 412, the sample count into sample counter 474, and the window count into window enable counter 476. Software is further used to set elapsed time counter 468 and blanking time counter 470 to zero. During the measurement cycle, software is used to provide a low pulse on the Start Measurement line to commence a measurement cycle. Using software, processor 5 recognizes and interprets any interrupt signals it receives and, at the end of the cycle, reads the count in counters 468 and 470. Software is used further to multiplex the four transducers 40, 42, 44 and 46, determine the highest maximum voltage of receive signals produced during a measurement cycle and control the variable voltage signal. Those of ordinary skill in the art will readily be able to produce software suitable for operating processor 5.

What is claimed is:

1.  A flow meter comprising:

means for propagating mechanical radiant energy along at least one propagation path, said energy propagating means being adapted to propagate said energy in two directions along said propagation path, said propagating means generating a receive signal each time said energy reaches a termination point of said propagation path;

means for causing said propagating means to propagate said energy along said path in each said direction;

means for receiving said receive signals and for determining the time required for said energy to propagate along said path in each said direction; and

means for calculating the flow velocity of material through which said radiant energy propagates according to the following expression:

$$V = \frac{K(t_u - t_d)}{(t_u + t_d)^2}$$

where:

V = the velocity at which the material is flowing across said propagation path,

$T_u = t_u + T_e$ ,

62.

LAW OFFICES
RT B. YEAGER. P.C.
PORTER BUILDING
;BURGH. PA 15219

$$T_d = t_d + T_e \, ,$$

$$K = \frac{2b^2}{(b-2R)\cos\theta}$$

$\theta$ = the angle formed by said propagation path and the direction of flow of the material,

D = the length of said propagation path,

R = the length of any portion of said path where it is assumed that the net flow velocity is zero,

$t_u$ = the said time required for said energy to propagate along said path in said first said direction,

$t_d$ = the time required for said energy to propagate along said path in said second said direction, and

$T_e$ = the time required for said causing means to cause said propagating means to initiate propagation of said energy, for said propagating means to generate a said receive signal upon said energy reaching a said termination point, and for said receive signal to be received by said receiving means.

63.

2. The meter recited by claim 1 wherein:

said causing means causes said propagating means to transmit a first group of at least two sonic pulses along said path in said first direction and a second group of at least two sonic pulses along said path in said second direction prior to each said calculation made by said calculating means;

said calculating means includes:

means for recording the time required for each said pulse to propagate along said path;

means for imposing a time delay between the time each said pulse finishes propagating along said path and the transmission of the next said pulse; and

means for accumulating the total duration of said time delays imposed during the transmission of each said group; and

said calculating means determining the value of $(t_u - t_d)$ using the following expression:

$$(t_u - t_d) = \frac{(Et_u - Et_d)}{N}$$

and determining the value of $(t_u + t_d)$ by using the following expression:

$$(t_u + t_d) = \frac{(Et_u - B_u + Et_u - B_d) - 2Te}{N}$$

64.

where:

$Et_u$ = the time required for said meter to cause all said sonic pulses of said first group to propagate along said path,

$Et_d$ = the time required for said meter to cause all said sonic pulses of said second group to propagate along said path,

$B_u$ = the total duration of said time delays imposed during transmission of said first group of sonic pulses along said path,

$B_d$ = the duration of all said time delays imposed during transmission of said second group of pulses along said path, and

$N$ = the number of said sonic pulses transmitted in each said group.

3. A flow meter comprising:

means for propagating mechanical radiant energy along at least one propagation path, said energy propagating means being adapted to propagate said energy in two directions along said propagation path, said propagating means generating a receive signal each time said energy reaches a termination point of said propagation paths;

65.

means for causing said propagating means to propagate said energy along said path in each said direction;

means for receiving said receive signals and for determining the time required for said energy to propagate along said path in each said direction;

means for determining from said determined times the flow velocity of material through which said radiant energy propagates;

said causing means causing said propagating means to transmit a first group of at least two energy pulses along said path in said first direction and a second group of at least two energy pulses along said path in said second direction prior to each said determination of velocity made by said determining means;

said determining means further including:

means for recording the time required for each said pulse to propagate along said path;

means for imposing a time delay between the time each said pulse finishes propagating along said path and the transmission of the next said pulse; and

means for accumulating the total duration of said time delays imposed during the transmission of each said groups;

said receiving means determining the time required for said energy to propagate along said path in each said direction from the time required to transmit along said path all said energy pulses of each said group and said total duration of said time delays.

66.

4. A flow meter comprising:

means for propagating mechanical radiant energy along at least one propagation path, said energy propagating means being adapted to propagate said energy in two directions along said propagation path, said propagating means generating a receive signal each time said energy reaches a termination point of said propagation paths;

means for causing said propagating means to propagate said energy along said path in each said direction;

means for receiving said receive signals and for determining the time required for said energy to propagate along said path in each said direction;

means for determining from said determined times the flow velocity of material through which said radiant energy propagates; and

means for determining from a group of at least one said receive signal whether said propagating means should alter the level of said energy produced by said propagating means and for causing said propagating means to effect any said alteration.

5. A flow meter comprising:

means for propagating mechanical radiant energy along at least one propagation path, said energy propagating means being adapted to propagate said energy in two directions along said propagation path, said propagating means generating a receive signal each time said energy reaches a termination point of said propagation paths;

67.

0179541

AW OFFICES
T D. YEAGER. P.C.
OSTER BUILDING

means for causing said propagating means to propagate said energy along said path in each said direction;

means for receiving said receive signal, and for determining the time required for said energy to propagate along said path in each said direction;

said receiving means determining the time required for said energy to propagate along said path by measuring the time elapsing between creation of said energy by said propagating means to receipt by said receiving means of the receive point of a receive signal corresponding to said energy, said receive point being a predetermined point at which said receive signal crosses a reference axis following the peak level of said receive signal; and

means for determining from said determined times the flow velocity of material through which said radiant energy propagates.

6. The meter recited by claim 5 wherein said predetermined point is the third said point occurring after said receive signal crosses said reference axis.

7. A meter for measuring the velocity at which material travels through a conduit comprising:

a housing defining an inlet and an outlet, and a passage joining said inlet to said outlet, said inlet and said outlet being adapted to communicate with the interior of the conduit to permit material to flow from the conduit through the inlet and passage of said housing and to exit said housing through said outlet to reenter the conduit;

means for propagating mechanical radiant energy along at least one propagation path, said energy propagating means being adapted to propagate said energy in two directions along said propagation path, material travelling through said passage causing a variance between the average velocity at which said energy propagates along said path in a first said direction and the average velocity at which said energy propagates along said path in a second said direction, said propagating means generating a receive signal each time said energy reaches a termination point of said propagation path;

means for causing said propagating means to propagate said energy along said path in each said direction;

means for receiving said receive signals and for determining the time required for said energy to propagate along said path in each said direction; and

means for calculating the velocity at which material flows through said housing according to the following expression:

$$V = \frac{K(t_u - t_d)}{(t_u + t_d)^2}$$

where:

    V = the velocity at which the material moves through said passage,

    $T_U = t_u + T_e$,

69.

$$T_d = t_d + T_e,$$

$$K = \frac{2D^2}{(D-2R)\cos\theta}$$

$\theta$ = the angle formed by said propagation path and
the longitudinal axis of a section of said
passage that contains at least a portion of said
path,

D = the length of said propagation path,

R = the length of each said portion of said path
that is not located in said passage,

$t_u$ = the said time required for said energy to
propagate along said path in said first said
direction,

$t_d$ = the time required for said energy to propagate
along said path in said second said direction,
and

$T_e$ = the time required for said causing means to
cause said propagating means to initiate
propagation of said energy, for said propagating
means to generate a said receive signal upon
said energy reaching a said termination point,
and for said receive signal to be received by
said receiving means.

70.

8.   A meter for measuring the velocity at which material travels through a conduit comprising:

a housing defining an inlet and an outlet, and a passage joining said inlet to said outlet, said inlet and said outlet being adapted to communicate with the interior of the conduit to permit material to flow from the conduit through the inlet and passage of said housing and to exit said housing through said outlet to reenter the conduit;

means for propagating mechanical radiant energy along at least one propagation path, said energy propagating means being adapted to propagate said energy in two directions along said propagation path, material travelling through said passage causing a variance between the average velocity at which said energy propagates along said path in a first said direction and the average velocity at which said energy propagates along said path in a second said direction, said propagating means generating a receive signal each time said energy reaches a termination point of said propagation paths;

means for causing said propagating means to propagate said energy along said path in each said direction;

means for receiving said receive signals and for determining the time required for said energy to propagate along said path in each said direction;

means for determining from said determined times the velocity at which the material flows through said housing;

said causing means causing said propagating means to transmit a first group of at least two energy pulses along said path in said first direction and a second group of at

71.

AW OFFICES
T D. YEAGER. P.C.
ORTER BUILDING
BURGH. PA 15219

least two energy pulses along said path in said second 0179541 direction prior to each said determination of velocity made by said determining means;

said determining means further including:

means for recording the time required for each said pulse to propagate along said path;

means for imposing a time delay between the time each said pulse finishes propagating along said path and the transmission of the next said pulse; and

means for accumulating the total duration of said time delays imposed during the transmission of each said groups;

said receiving means determining the time required for said energy to propagate along said path in each said direction from the time required to transmit along said path all said energy pulses of each said group and said total duration of said time delays.

9. A meter for measuring the velocity at which material travels through a conduit comprising:

a housing defining an inlet and an outlet, and a passage joining said inlet to said outlet, said inlet and said outlet being adapted to communicate with the interior of the conduit to permit material to flow from the conduit through the inlet and passage of said housing and to exit said housing through said outlet to reenter the conduit;

means for propagating mechanical radiant energy along at least one propagation path, said energy propagating means being adapted to propagate said energy in two directions along said propagation path, material travelling through said passage causing a variance between the average velocity at which said energy propagates along said path in a first said direction and the average velocity at which said energy propagates along said path in a second said direction, said propagating means generating a receive signal each time said energy reaches a termination point of said propagation paths;

means for causing said propagating means to propagate said energy along said path in each said direction;

means for receiving said receive signals and for determining the time required for said energy to propagate along said path in each said direction;

means for determining from said determined times the velocity at which the material flows through said housing; and

means for determining from a group of at least one said receive signal whether said propagating means should alter the level of said energy produced by said propagating means and for causing said propagating means to effect any said alteration.

73.

LAW OFFICES
RT D. YEAGER, P.C.
PORTER BUILDING
BURGH, PA 15219

10. A meter for measuring the velocity at which material travels through a conduit comprising:

a housing defining an inlet and an outlet, and a passage joining said inlet to said outlet, said inlet and said outlet being adapted to communicate with the interior of the conduit to permit material to flow from the conduit through the inlet and passage of said housing and to exit said housing through said outlet to reenter the conduit;

means for propagating mechanical radiant energy along at least one propagation path, said energy propagating means being adapted to propagate said energy in two directions along said propagation path, material travelling through said passage causing a variance between the average velocity at which said energy propagates along said path in a first said direction and the average velocity at which said energy propagates along said path in a second said direction, said propagating means generating a receive signal each time said energy reaches a termination point of said propagation paths;

means for causing said propagating means to propagate said energy along said path in each said direction;

means for receiving said receive signal, and for determining the time required for said energy to propagate along said path in each said direction;

said receiving means determining the time required for said energy to propagate along said path by measuring the time elapsing between creation of said energy by said propagating means to receipt by said receiving means of the receive point of a receive signal corresponding to said energy, said receive

74.

point being the third point at which said receive signal crosses a reference axis following the peak level of said receive signal; and

means for determining from said determined times the flow velocity of material through which said radiant energy propagates.

.AW OFFICES
RT D. YEAGER. P.C.
PORTER BUILDING

FIG. 1

DISPLAY — 1

KEYPAD — 2

CO-PROCESSOR — 3

MAILBOX MEMORY — 4

MAIN PROCESSOR — 5

SONIC SUPPORT CIRCUIT — 8

SONIC INTERFACE CIRCUIT — 9

TO TRANSDUCER 40
TO TRANSDUCER 42
TO TRANSDUCER 44
TO TRANSDUCER 46

16

TO EXTERNAL COMMUNICATIONS

TO EXTERNAL COMMUNICATIONS

NON-VOLATILE MEMORY — 6

ANALOG INTERFACE — 7

POWER SUPPLY — 11

TOTALIZER OUTPUT CIRCUIT — 13

4-20 mA OUTPUTS   4-20 mA INPUTS

A.C. IN   PULSE OUTPUTS

FIG. 1a

21
46
40
42
44
18
36

FIG. 1b

10
40
42
18
38

FIG. 1c

44
46

1/16

0179541

FIG. 2

A/e WHERE
e = 2.7183

FIG. 12

UPSTREAM MEASUREMENT CYCLE

DOWNSTREAM MEASUREMENT CYCLE

UPSTREAM MEASUREMENT CYCLE

FIG. 3

t=0

TRANSMIT RECEIVE PULSES

BLANKING PERIOD AND PHASE ONE OF MUTE PERIOD

PHASE TWO OF MUTE PERIOD

RECEIVE WINDOW PERIOD

TIME

FIG. 4

RECEIVED VOLTAGE

TIME

FIG. 13

FIG. 5

FIG. 6

FIG. 7

FIG. 8

FIG. 9a

7/16

0179541

FIG. 9b

8/16

0179541

FIG. 9c

0179541

VIEW SHOWING TYPICAL CIRCUITRY FOR FL-I AND FL-2

COMPONENT DESIGNATIONS SHOWN IN BRACKETS, ( ), ARE FOR FL-2
ALL OTHERS ARE FOR FL-I.

FIG. 9d

FIG. 10

FIG. 11

0179541

FIG. 14a

FIG. 14b

0179541

FIG. 14c

FIG. 14d

0179541